# EUROPEAN PATENT APPLICATION

(11) **EP 4 682 775 A1**
(43) Date of publication of application: **21.01.2026**
(21) Application number: 24770556.9
(22) Date of filing: 29.02.2024
(51) Int. Cl.: G06N 5/00, G06F 16/90, G10L 15/00

(54) **BEHAVIOR CONTROL SYSTEM AND PROGRAM**

(30) Priority: 13.03.2023 JP 2023039084; 30.05.2023 JP 2023088896; 31.05.2023 JP 2023090252; 23.06.2023 JP 2023103691; 06.07.2023 JP 2023111715; 25.07.2023 JP 2023121154
(71) Applicant: SoftBank Group Corp., Tokyo 105-7537 (JP)
(72) Inventor: SON, Masayoshi, Tokyo 105-7537 (JP)
(74) Representative: DREISS Patentanwälte PartG mbB
(86) International application number: PCT/JP2024/007632
(87) International publication number: WO 2024/190445

(57) **Abstract**

The action control system includes an action recognition unit that recognizes an action of a user, a difficulty level estimation unit that estimates a difficulty level of a question in a case in which the action of the user is recognized as the question, and an action determination unit that determines an action of enjoying being questioned by the user and an action of answering the question, as an action to be executed, in a case in which a score corresponding to the difficulty level is equal to or more than a threshold value.

## Description

### Technical Field

The present invention relates to an action control system and a program.

### Background Art

There is known an action control system including an action information storage unit that stores determination information for determining an action based on a state of a user, a user state recognition unit that recognizes a state of the user, an action determination unit that determines an action to be executed based on the state of the user recognized by the user state recognition unit and the determination information, a reaction recognition unit that recognizes a reaction of the user to execution of the action determined by the action determination unit, a transmission unit that transmits, to an external server, the state of the user recognized by the user state recognition unit, the action determined by the action determination unit, and the reaction of the user recognized by the reaction recognition unit, a reception unit that receives, from the server, an action suitable for the state of the user recognized by the user state recognition unit in a case in which the action determination unit cannot determine an action to be executed based on the state of the user and the determination information, and an action information update unit that updates the determination information based on the action received by the reception unit from the server (see, for example, Japanese Patent No. 6053847).

### SUMMARY OF INVENTION

### Technical Problem

It is desired to cause a robot to execute an appropriate action in response to a question from a user.

### Solution to Problem

According to a first aspect of the invention, an action control system is provided. The action control system includes an action recognition unit that recognizes an action of a user, a difficulty level estimation unit that estimates a difficulty level of a question in a case in which the action of the user is recognized as the question, and an action determination unit that determines an action of enjoying being questioned by the user and an action of answering the question, as an action to be executed, in a case in which a score corresponding to the difficulty level is equal to or more than a threshold value.

The action determination unit may determine an action of enjoying being questioned by the user and an action of answering the question, as the action to be executed, in a case in which an accumulated value of the score is equal to or more than a threshold value, or in a case in which a number of times of the score corresponding to the difficulty level being equal to or more than the threshold value is equal to or more than a predetermined number of times.

According to a second aspect of the invention, an action control system is provided. The action control system includes
an action recognition unit that recognizes an action of a user, a difficulty level estimation unit that estimates a difficulty level of a question in a case in which the action of the user is recognized as the question, and an action determination unit that determines an action of answering the question and at least one of an action in which a robot takes a predetermined gesture or an action in which a specific vocal sound is output, as an action to be executed by the robot, in a case in which a score corresponding to the difficulty level is equal to or more than a threshold value.

The action determination unit may select at least one of a gesture of calling attention to the user, a gesture of making the user pleasant, or a gesture of expressing a content of the answer to the user, as the predetermined gesture, in a case in which an accumulated value of the score is equal to or more than a threshold value.

The action determination unit may select at least one of music or a sound effect having a lower output than a vocal sound of the answer to the user, as the specific vocal sound, in a case in which the accumulated value of the score is equal to or more than the threshold.

According to a third aspect of the invention, an action control system is provided. The action control system includes an action recognition unit that recognizes an action of a user, a difficulty level estimation unit that estimates a difficulty level of a question in a case in which the action of the user is recognized as the question, and an action determination unit that selects one answer mode from a plurality of answer modes based on a content of the question, and determines an action of answering the question in an aspect according to the difficulty level estimated in the selected answer mode, as an action to be executed by a robot.

The answer mode may include a conversation mode in which the user mainly has a conversation with the robot, and the action determination unit may set a reaction of the robot being happy in the conversation mode to be greater than a reaction in other answer modes.

The answer mode may include a study mode in which the user is taught by the robot, and the action determination unit may set a reaction of the robot being happy in the study mode to be less than a reaction in other answer modes.

The answer mode may include a consultation mode in which the user gives consultation to the robot, and the action determination unit may suppress a reaction of the robot being happy in the consultation mode.

According to a fourth aspect, a program is provided. The program causes a computer to function as the action control system.

The outline of the invention does not enumerate all the necessary features of the invention. A subcombination of these feature groups may also be an invention.

### BRIEF DESCRIPTION OF DRAWINGS

Fig. 1 schematically illustrates an example of a system 5 according to the present embodiment.
Fig. 2 schematically illustrates a functional configuration of a robot 100.
Fig. 3 schematically illustrates an example of an operation flow by a robot 100 according to a first embodiment.
Fig. 4A is an image view illustrating an example of a gesture taken by a robot 100 according to a third embodiment.
Fig. 4B schematically illustrates an example of an operation flow by the robot 100 according to the third embodiment.
Fig. 5A schematically illustrates an example of an operation flow by a robot 100 according to a fourth embodiment.
Fig. 5B schematically illustrates an example of the operation flow by the robot 100 according to the fourth embodiment.
Fig. 5C schematically illustrates an example of an operation flow by a robot 100 according to a fifth embodiment.
Fig. 5D schematically illustrates an example of an operation flow by a robot 100 according to a sixth embodiment.
Fig. 5E illustrates an emotion map 5400 on which a plurality of emotions are mapped.
Fig. 6A schematically illustrates a functional configuration of a robot 100 according to a seventh embodiment.
Fig. 6B illustrates an example of utterance of a response action of the robot 100 according to the seventh embodiment.
Fig. 6C illustrates an example of movement of the response action of the robot 100 according to the seventh embodiment.
Fig. 6D schematically illustrates an example of an operation flow by the robot 100 according to the seventh embodiment.
Fig. 7 schematically illustrates an example of a hardware configuration of a computer 1200.

### DESCRIPTION OF EMBODIMENTS

Hereinafter, the invention will be described through embodiments of the invention, but the following embodiments do not limit the inventions according to the claims. Not all combinations of features described in the embodiments are essential to the solution of the invention.

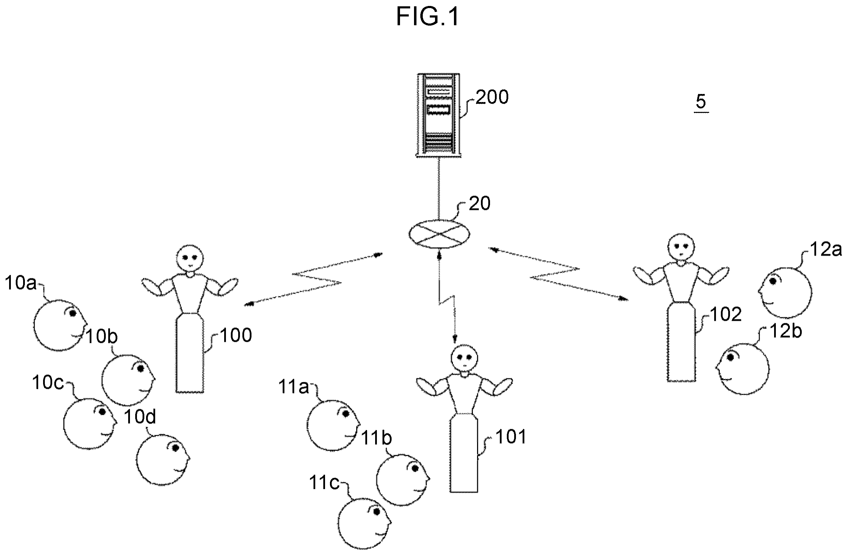

Fig. 1 schematically illustrates an example of a system 5 according to the present embodiment. The system 5 includes a robot 100, a robot 101, a robot 102, and a server 300. A user 10a, a user 10b, a user 10c, and a user 10d are users of the robot 100. A user 11a, a user 11b, and a user 11c are users of the robot 101. A user 12a and a user 12b are users of the robot 102. In the description of the present embodiment, the user 10a, the user 10b, the user 10c, and the user 10d may be collectively referred to as a user 10. The user 11a, the user 11b, and the user 11c may be collectively referred to as a user 11. The user 12a and the user 12b may be collectively referred to as a user 12. The robot 101 and the robot 102 have substantially the same functions as those of the robot 100. Therefore, the system 5 will be described focusing on the function of the robot 100.

The robot 100 has a conversation with the user 10 and provides a video to the user 10. At this time, the robot 100 conducts a conversation with the user 10 or provides a video or the like to the user 10 in cooperation with the server 300 and the like that can communicate via a communication network 20. For example, the robot 100 not only learns appropriate conversational skills by itself, but also performs learning so that a conversation with the user 10 can proceed more appropriately in cooperation with the server 300. The robot 100 causes the server 300 to record the captured video data and the like of the user 10, requests the server 300 to transmit the video data and the like if necessary, and provides the video data and the like to the user 10.

The robot 100 has an emotion value indicating the type of emotion of the robot 100. For example, the robot 100 has emotion values indicating the strength of the respective emotions of "happiness", "anger", "sorrow", "pleasure", "enjoyment", "discomfort", "relief", "anxiety", "sadness", "excitement", "worry", "security", "fulfillment", "emptiness", and "normal". For example, in a case in which the robot 100 has a conversation with the user 10 in a state where the emotion value of excitement is large, the robot emits a vocal sound at a fast speed. As described above, the robot 100 can express the emotion of the robot 100 by an action.

The robot 100 has a function of recognizing an action of the user 10. The robot 100 recognizes the action of the user 10 by analyzing a face image of the user 10 acquired by a camera function and the vocal sound of the user 10 acquired by a microphone function. The robot 100 determines an action to be executed by the robot 100 based on the recognized action of the user 10 or the like.

The robot 100 stores a rule defining an action to be executed by the robot 100 based on the action of the user 10, and performs various actions in accordance with the rule.

Specifically, the robot 100 has a reaction rule for determining an action of the robot 100 based on an action of the user 10. In the reaction rule, for example, in response to a case in which the action of the user 10 is "laughing", an action of "laughing" is defined as the action of the robot 100. In the reaction rule, in response to a case in which the action of the user 10 is "getting angry", an action of "apologizing" is defined as the action of the robot 100. In the reaction rule, in response to a case in which the action of the user 10 is "questioning", an action of "answering" is defined as the action of the robot 100. In the reaction rule, in response to a case in which the action of the user 10 is "being sad", an action of "making a sound" is defined as the action of the robot 100.

In a case in which the robot 100 recognizes that the action of the user 10 is "laughing" based on the reaction rule, the robot selects the action of "laughing" defined in the reaction rule, as the action to be executed by the robot 100. For example, in a case of selecting the action of "laughing", the robot 100 performs a "laughing" operation and outputs a vocal sound representing laughing vocal sound. As a result, the robot 100 can laugh together with the user 10.

The robot 100 transmits, to the server 300, user reaction information indicating that a positive reaction has been obtained from the user 10 by this action. The user reaction information includes, for example, a user action of "laughing", an action of the robot 100 of "laughing", an attribute of the user 10, and that the reaction of the user 10 is positive.

The server 300 stores the user reaction information received from the robot 100. The server 300 receives and stores the user reaction information not only from the robot 100 but also from each of the robot 101 and the robot 102. The server 300 analyzes the user reaction information from the robot 100, the robot 101, and the robot 102, and updates the reaction rule.

The robot 100 receives the updated reaction rule from the server 300 by inquiring of the server 300 about the updated reaction rule. The robot 100 incorporates the updated reaction rule into the reaction rule stored in the robot 100. As a result, the robot 100 can incorporate the reaction rule acquired by the robot 101, the robot 102, or the like into the reaction rule of the robot 100.

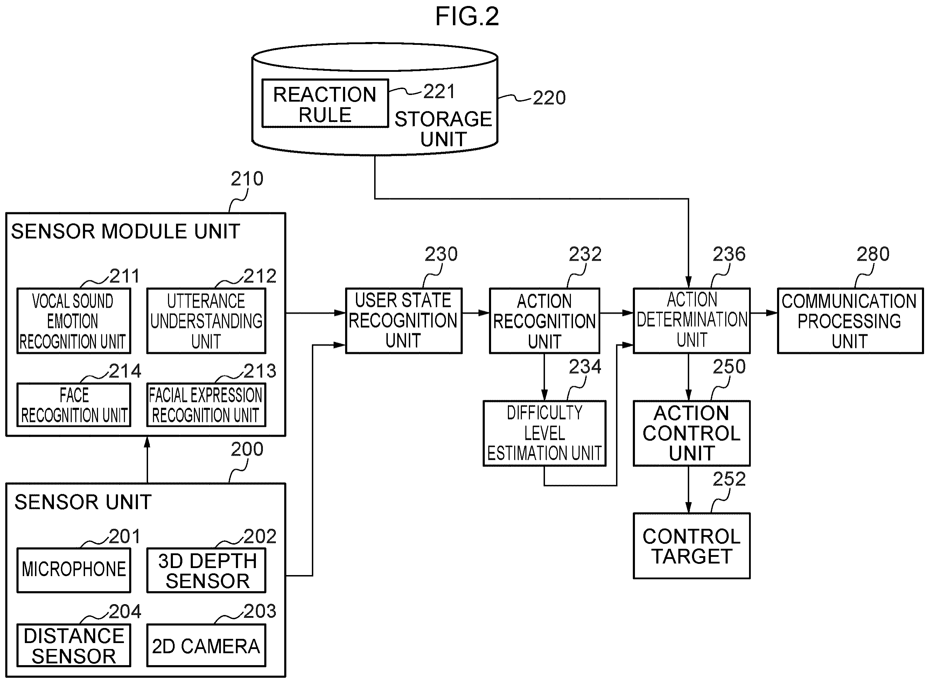

Fig. 2 schematically illustrates a functional configuration of the robot 100. The robot 100 includes a sensor unit 200, a sensor module unit 210, a storage unit 220, a user state recognition unit 230, an action recognition unit 232, a difficulty level estimation unit 234, an action determination unit 236, an action control unit 250, a control target 252, and a communication processing unit 280.

The control target 252 includes a display device, a speaker, an LED of an eye portion, a motor that drives an arm, a hand, a foot, or the like, and the like. The posture and gesture of the robot 100 are controlled by controlling the motor of the arm, the hand, the foot, and the like. Some of the emotions of the robot 100 can be expressed by controlling these motors. Some of the emotions of the robot 100 can be expressed by controlling a light emission state of the LED at the eye portion of the robot 100. The posture, gesture, and facial expression of the robot 100 are examples of the attitude of the robot 100.

The sensor unit 200 includes a microphone 201, a 3D depth sensor 202, a 2D camera 203, and a distance sensor 204. The microphone 201 continuously detects a vocal sound and outputs vocal sound data. The microphone 201 may be provided on the head of the robot 100 and may have a function of performing binaural recording. The 3D depth sensor 202 detects the contour of an object by continuously emitting an infrared pattern and analyzing the infrared pattern from an infrared image continuously captured by an infrared camera. The 2D camera 203 is an example of an image sensor. The 2D camera 203 captures an image with visible light and generates video information of visible light. The distance sensor emits, for example, a laser, an ultrasonic wave, or the like and detects a distance to the object. The sensor unit 200 may further include a clock, a gyro sensor, a touch sensor, a sensor for motor feedback, and the like.

Among the constituent elements of the robot 100 illustrated in Fig. 2, the constituent elements other than the control target 252 and the sensor unit 200 are examples of the constituent elements of the action control system of the robot 100. The action control system of the robot 100 controls the control target 252.

The storage unit 220 includes a reaction rule 221. At least a part of the storage unit 220 is implemented by a storage medium such as a memory. A person DB that stores a face image of the user 10, attribute information of the user 10, and the like may be included. Among the constituent elements of the robot 100 illustrated in Fig. 2, the functions of the constituent elements other than the control target 252, the sensor unit 200, and the storage unit 220 can be realized by a CPU operating based on a program. For example, the functions of these constituent elements can be implemented as the operation of the CPU by basic software (OS) and a program operating on the OS.

The sensor module unit 210 includes a vocal sound emotion recognition unit 211, an utterance understanding unit 212, a facial expression recognition unit 213, and a face recognition unit 214. Information detected by the sensor unit 200 is input to the sensor module unit 210. The sensor module unit 210 analyzes information detected by the sensor unit 200 and outputs an analysis result to the user state recognition unit 230.

The vocal sound emotion recognition unit 211 of the sensor module unit 210 analyzes the vocal sound of the user 10 detected by the microphone 201 and recognizes the emotion of the user 10. For example, the vocal sound emotion recognition unit 211 extracts a feature amount such as a frequency component of vocal sound and recognizes the emotion of the user 10 based on the extracted feature amount. The utterance understanding unit 212 analyzes the vocal sound of the user 10 detected by the microphone 201 and outputs text information indicating the utterance content of the user 10.

The facial expression recognition unit 213 recognizes the facial expression of the user 10 and the emotion of the user 10 from the image of the user 10 captured by the 2D camera 203. For example, the facial expression recognition unit 213 recognizes the facial expression and emotion of the user 10 based on the shapes, positional relationships, and the like of the eyes and the mouth.

The face recognition unit 214 recognizes the face of the user 10. The face recognition unit 214 recognizes the user 10 by matching a face image stored in the person DB (not illustrated) with a face image of the user 10 captured by the 2D camera 203.

The user state recognition unit 230 recognizes the state of the user 10 based on the information analyzed by the sensor module unit 210. For example, processing mainly related to perception is performed using the analysis result of the sensor module unit 210. For example, perception information such as "dad is alone." and "the probability that dad is not smiling is 90%." is generated. Processing of understanding the meaning of the generated perception information is performed. For example, semantic information such as "dad is alone and looks lonely" is generated.

The action recognition unit 232 recognizes an action of the user 10 based on the information analyzed by the sensor module unit 210 and the state of the user 10 recognized by the user state recognition unit 230. For example, the information analyzed by the sensor module unit 210 and the recognized state of the user 10 are input to a neural network learned in advance, a probability of each of a plurality of predetermined action classifications (for example, "laughing", "getting angry", "questioning", and "being sad") is acquired, and the action classification having the highest probability is recognized as the action of the user 10.

In a case in which the action of the user recognized by the action recognition unit 232 is recognized as "questioning", the difficulty level estimation unit 234 estimates a score corresponding to the difficulty level of the question based on text information indicating the utterance content of the user 10 among types of the information analyzed by the sensor module unit 210. For example, the text information indicating the utterance content of the user 10 is input to a neural network learned in advance, and a score corresponding to the difficulty level of the question is acquired. This score indicates a higher value as the difficulty level of the question becomes higher.

The action determination unit 236 determines an action of the robot 100 based on the action of the user recognized by the action recognition unit 232 and the reaction rule 221. At this time, in a case in which the score corresponding to the difficulty level estimated by the difficulty level estimation unit 234 is equal to or more than a threshold value, an action of being pleased to be questioned by the user 10 and an action of answering the question are determined as actions to be executed. Here, the "action that makes the user happy to be questioned" is, for example, a proud action (boastful action) of being questioned by the user.

The action control unit 250 controls the control target 252 based on the action determined by the action determination unit 236. For example, in a case in which the action determination unit 236 determines an action including uttering, the action control unit 250 causes a speaker included in the control target 252 to output a vocal sound. At this time, the action control unit 250 may determine the speaking speed of the vocal sound based on the emotion value of the robot 100.

In a case in which the action determination unit 236 has determined "an action that makes happy to be questioned by the user", the action control unit 250 outputs a vocal sound (for example, "I am good at answering such a question") indicating a peculiar thing from the speaker, and expresses the posture and the gesture (for example, an operation of slowly raising one hand) of the robot 100 indicating being proud by driving the motor of the arm, the hand, the foot, or the like.

The action control unit 250 may recognize a change in emotion of the user 10 in response to execution of the action determined by the action determination unit 236. For example, the change in emotion may be recognized based on the vocal sound or facial expression of the user 10. In addition, the change in emotion of the user 10 may be recognized based on detection of an impact by the touch sensor included in the sensor unit 200. In a case in which an impact is detected by the touch sensor included in the sensor unit 200, it may be recognized that the emotion of the user 10 is worsened. In a case in which it is determined that the reaction of the user 10 is laughing or happy from the detection result of the touch sensor included in the sensor unit 200, it may be recognized that the emotion of the user 10 becomes good. Information indicating the reaction of the user 10 is output to the communication processing unit 280.

The communication processing unit 280 handles communication with the server 300. As described above, the communication processing unit 280 transmits the user reaction information to the server 300. The communication processing unit 280 receives the updated reaction rule from the server 300. In a case in which the communication processing unit 280 receives the updated reaction rule from the server 300, the communication processing unit 280 updates the reaction rule 221.

The server 300 performs communication between the robot 100, the robot 101, and the robot 102 and the server 300, receives the user reaction information transmitted from the robot 100, and updates the reaction rule based on the reaction rule including the action for which a positive reaction has been obtained.

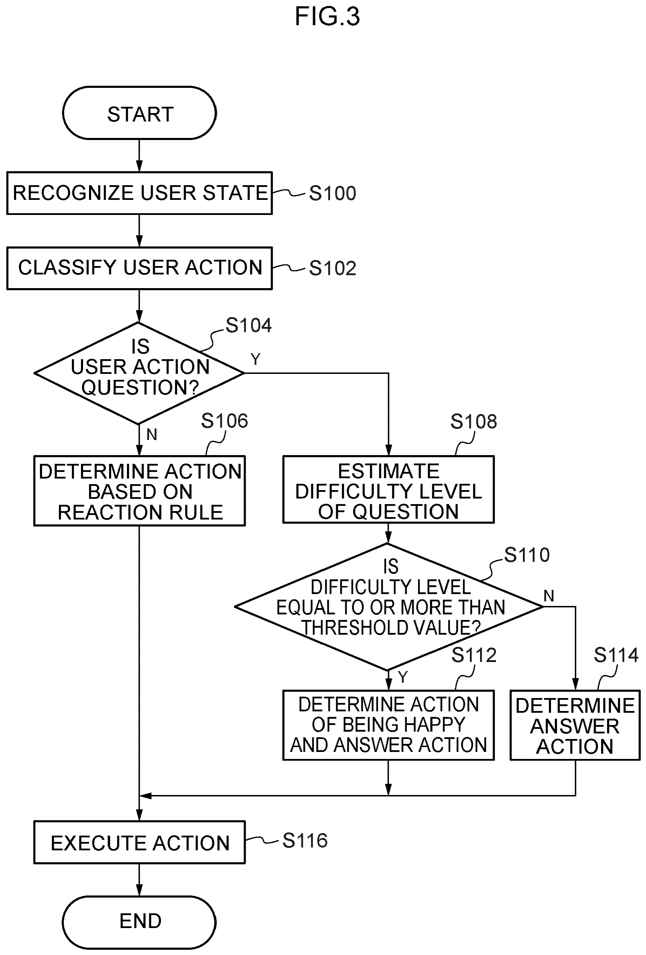

Fig. 3 schematically illustrates an example of an operation flow related to an operation of determining an action in the robot 100. The operation flow illustrated in Fig. 3 is repeatedly executed. At this time, it is assumed that the information analyzed by the sensor module unit 210 is input. "S" in the operation flow represents a step to be executed.

First, in Step S100, the user state recognition unit 230 recognizes the state of the user 10 based on the information analyzed by the sensor module unit 210.

In Step S102, the action recognition unit 232 recognizes the action classification of the user 10 based on the information analyzed by the sensor module unit 210 and the state of the user 10 recognized by the user state recognition unit 230.

In Step S104, it is determined whether or not the action classification of the user 10 recognized in Step S102 is "questioning". In a case in which the action classification of the user 10 recognized in Step S102 is "questioning", the processing proceeds to Step S108. In a case in which the action classification of the user 10 recognized in Step S102 is not "questioning", the processing proceeds to Step S106.

In Step S106, the action determination unit 236 determines an action of the robot 100 based on the action of the user recognized by the action recognition unit 232 and the reaction rule 221.

In Step S108, the difficulty level estimation unit 234 estimates a score corresponding to the difficulty level of the question based on text information indicating the utterance content of the user 10 in the information analyzed by the sensor module unit 210.

In Step S110, it is determined whether or not the score corresponding to the difficulty level of the question, which has been estimated in Step S108, is equal to or more than a threshold value. In a case in which the score corresponding to the difficulty level of the question, which has been estimated in Step S108, is equal to or more than the threshold value, the processing proceeds to Step S112. In a case in which the score corresponding to the difficulty level of the question, which has been estimated in Step S108, is less than the threshold value, the processing proceeds to Step S114.

In Step S112, the action determination unit 236 determines, as the action to be executed, an action of being pleased to be questioned by the user 10 and an action of answering the question.

In Step S114, the action determination unit 236 determines an action of answering a question as an action to be executed based on the reaction rule 221.

In Step S116, the action control unit 250 controls the control target 252 based on the action determined by the action determination unit 236.

As described above, according to the robot 100, it is possible to take a boastful action in response to a question from the user at an appropriate timing. That is, in a case in which the difficulty level of the question is higher than the threshold value, a boastful facial expression and appearance can be made. For example, in a case in which an answer to a difficult calculation is questioned or in a case in which a delicious restaurant is questioned, the robot 100 gives a boastful facial expression and appearance, and answers the question. In a case in which the difficulty level of the question is lower than the threshold value, for example, in a case in which a question with a low difficulty level such as "what time is it now?" or "what is the weather today?" is asked, the robot 100 answers the question without showing off a boastful facial expression or appearance.

The action determination unit 236 may determine an action of enjoying being questioned by the user and an action of answering the question, as the actions to be executed, in a case in which an accumulated value of the score corresponding to the difficulty level is equal to or more than a threshold value, or in a case in which a number of times of the score corresponding to the difficulty level being equal to or more than the threshold value exceeds a predetermined number of times.

The difficulty level estimation unit 234 may estimate the difficulty level of the question in consideration of the age of the user who asks the question. For example, even for the same question, the difficulty level estimation unit 234 may estimate the difficulty level of the question so that a difficulty level score is gradually lowered from 3 years old to 18 years old and then kept constant. That is, the difficulty level estimation unit 234 may cause a difference in the reaction of being happy of the robot depending on the age even for the same question.

For example, even though the question content is simple, the difficulty level estimation unit 234 increases the difficulty level score in a case in which the question content is a content that has not been learned at the age of the user, and causes the robot to take an action of being happy in response to the question from the user.

Specifically, in a case in which the user is in the first grade of an elementary school and the user asks a question about a multiplication problem that the user learns in the second grade of the elementary school, the difficulty level estimation unit 234 increases the difficulty level of the question compared with a difficulty level in a case in which the user is in the second grade of the elementary school, and causes the robot to show off a boastful facial expression or appearance in a case of answering. In a case in which the user is in the third grade of the elementary school and the user asks a question about a multiplication problem that the user learns in the second grade of the elementary school, the difficulty level estimation unit 234 reduces the difficulty level of the question compared with a difficulty level in a case in which the user is in the second grade of the elementary school, and causes the robot not to show off a boastful facial expression or appearance in a case of answering.

Conversely, the difficulty level estimation unit 234 may raise the difficulty level score gradually after the age of the user passes a certain age (for example, 70 years old) even for the same question.

As described above, by estimating the difficulty level of a question in consideration of the age of the user, it is possible to cause the robot 100 to react according to the age of the user who asks the question.

### [Second Embodiment]

The action control unit 250 may change the time until the robot 100 executes an action in response to a question of the user 10 according to the score corresponding to the difficulty level of the question estimated by the difficulty level estimation unit 234. For example, as the score estimated by the difficulty level estimation unit 234 becomes lower, the time until the robot 100 returns an answer to the question of the user may be shortened. As the score becomes higher, the time until an answer is returned to the question of the user 10 may be lengthened, or the robot 100 may be caused to perform a thought gesture until an answer is returned. The action control unit 250 may cause the robot 100 to execute an action such as crossing an arm, putting a hand on the head, or turning on the spot as the thought gesture until an answer is returned.

The action control unit 250 changes the time until the robot 100 executes an action in response to the question of the user 10 according to the score, so that the difficulty level of the question can be expressed to the user 10 who asked the question by a lapse of time or the like. That is, it is possible to give a sense of satisfaction that the question that makes the robot ponder is given to the user 10 who has asked question.

Even in a case in which the score corresponding to the difficulty level of the question estimated by the difficulty level estimation unit 234 is relatively low and an immediate answer can be made, the action control unit 250 may change the time until the robot 100 executes an action in response to the question of the user 10 depending on the age of the user 10. For example, in a case in which the user 10 who has asked a question is a child even though the score is the same, the action control unit 250 may increase the time until the robot 100 executes an action in response to the question of the user 10 as compared with a case in which the user 10 who has asked a question is an adult. That is, the action control unit 250 can cause the robot 10 to give an answer after a little consideration according to the age of the user 10 even though the question can be easily answered.

Even in a case in which the score corresponding to the difficulty level of the question estimated by the difficulty level estimation unit 234 is the same, the action control unit 250 may change the time until the robot 100 executes the action in response to the question of the user 10 depending on the attribute of the user 10. For example, even though the score is the same, the time until the robot 100 executes the action in response to the question of the user 10 may be changed between a case in which the user 10 who asks the question is male and a case in which the user 10 is female.

### [Third Embodiment]

A third embodiment is characterized in that, in a case in which the robot 100 is questioned by the user 10, and the score corresponding to the difficulty level of the question is equal to or more than the threshold value, the robot 100 takes a predetermined gesture and outputs a specific vocal sound as an action to be executed.

In a case in which the difficulty level of the question is high, it is expected that the answer explanation of the robot 100 becomes longer and the time until the user 10 who is a questioner understands is lengthened.

Therefore, in the present embodiment, it is possible to cause the robot 100 to take a gesture or output a vocal sound during an answer explanation to a question with a high difficulty level.

Hereinafter, differences from the first embodiment will be described. The same components are denoted by the same reference signs, and a detailed description thereof will be omitted.

The action determination unit 236 determines an action of the robot 100 based on the action of the user 10 recognized by the action recognition unit 232 and the reaction rule 221. At this time, in a case in which the action of the user 10 is "questioning", and the score corresponding to the difficulty level estimated by the difficulty level estimation unit 234 is equal to or more than the threshold value, an action of taking a gesture and an action of outputting a vocal sound are determined as actions to be executed.

The difficulty level estimation unit 234 estimates a score corresponding to the difficulty level of the question, and determines whether or not the score is equal to or more than the threshold value. The case in which the score corresponding to the difficulty level estimated by the difficulty level estimation unit 234 is equal to or more than the threshold value is a case in which the difficulty level of the question of the user 10 is high.

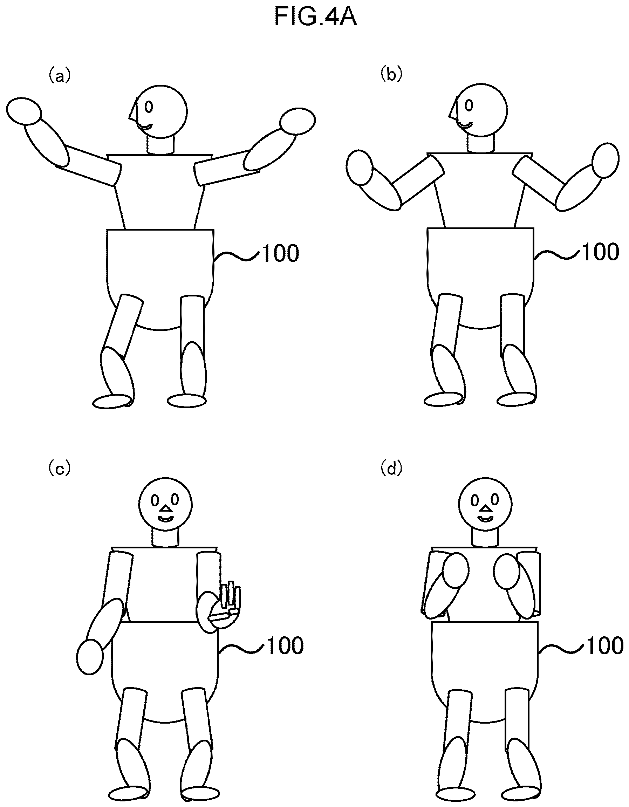

Fig. 4A is an image diagram of an example of a gesture of the robot 100 in a case in which the action determination unit 236 determines to cause the robot 100 to take a predetermined gesture.

Examples of the predetermined gesture as the action of the robot 100 include (1) a gesture of attracting attention, (2) a gesture of brightly entertaining, (3) a gesture of expressing an explanation content, (4) a gesture of emphasizing an explanation portion, and (5) a gesture of self-dancing. The action of the robot 100 to make a gesture is not limited to the listed examples. Here, (1) the gesture of attracting attention is an example of a gesture of calling attention to the user. (2) The gesture of brightly entertaining and (5) the gesture of self-dancing are examples of a gesture of entertaining the user. (3) The gesture of expressing the explanation content and (4) the gesture of emphasizing the explanation portion are examples of a gesture of expressing the content of the answer to the user.

Fig. 4A(a) is an image diagram of (1) the gesture of attracting attention.

For example, the gesture is performed in a case in which the user 10 is bored with the long answer explanation of the robot 100 and is moving to another direction or looking away.

Specifically, the gesture is that the robot 100 raises the upper arm of the robot 100 to a high position, and further bends or extends the wrist joint, so that the interest of the user 10 is directed to the robot 100. In the case of a human, the gesture is similar to a gesture performed in a case of saying "look over here ~".

Fig. 4A(b) is an image diagram of (2) the gesture of brightly entertaining.

For example, the gesture is performed in a case in which the user 10 feels bored with the answer explanation of the robot 100 and the facial expression is cloudy or faces downward.

Specifically, the gesture causes the user 10 to have a pleasant emotion by bending the joint of the arm portion of the robot 100 and moving the joint in a rhythmic manner.

Fig. 4A(c) is an image diagram of (3) the gesture of expressing the explanation content.

For example, the gesture is performed in a case in which the user 10 feels difficult in the answer explanation of the robot 100 and cannot keep up with understanding and groans or tilts the head.

Specifically, the gesture is to catch up with the understanding of the user 10 by expressing the number with the fingers of the hand of the robot 100 or expressing the explanation contents with gestures.

Fig. 4A(d) is an image diagram of (4) the gesture of emphasizing an explanation portion.

For example, the gesture is performed in a case in which it is difficult for the user 10 to know where the point is due to the long answer explanation of the robot 100, and the facial expression is dazed or sleepy.

Specifically, this is a gesture by which the robot 100 takes an emphasized pose while outputting a vocal sound of "this portion is important" in the middle of the answer explanation so that the point of the answer explanation is transferred to the user 10.

In addition to this, the robot 100 can make various gestures such as raising the interest of the user 10 by dancing during the answer explanation of the robot 100 as in (5) the self-dancing (not illustrated).

As described above, the robot 100 makes a predetermined gesture during the answer explanation to the question from the user 10, so that it is possible to assist the understanding of the user and to entertain or excite the user. The predetermined gesture includes various variations other than the gesture of attracting attention, the gesture of brightly enjoying, the gesture of expressing the explanation content, the gesture of emphasizing the explanation portion, and the gesture of self-dancing. Examples of the gesture include a gesture of thinking together, a gesture of laughing, and a gesture of nodding or affirming.

In a case in which the action determination unit 236 determines to output a specific vocal sound to the robot 100, the robot 100 outputs a vocal sound.

There are two types of vocal sound output by the robot 100: (1) playing BGM (Background music); and (2) playing sound effect.
(1) The BGM is background music, and may be a tune played by a musical instrument or a natural sound such as a bird singing or a stream of a river.

Specifically, in a case in which the user 10 is bored with the long answer explanation of the robot 100, the robot 100 plays upbeat music to increase the interest of the user 10.

More specifically, in a case in which the user 10 has difficulty in following the answer explanation of the robot 100, music for relaxing is played from the robot 100 to relieve the tension of the user 10.

(2) The sound effect is a sound other than the BGM emitted from the robot 100, and is a sound added as a part of performance.

Specifically, in a case in which the user 10 is bored with the long answer explanation of the robot 100, the robot 100 is caused to output a sound effect of "beep" to increase the interest of the user 10.
specifically, in a case in which the answer explanation of the robot 100 is long, and a portion to be emphasized appears in the explanation, the robot 100 may be caused to output a sound effect of a drum roll or the like such as "jajaja", and the sound effect may be caused to flow so that the emphasized portion is emphasized or excited.

The BGM and the sound effect as the specific vocal sound output by the robot 100 are configured to have a lower volume or vocal sound pressure than the vocal sound of the answer to the question. That is, the BGM and the sound effect are set so as not to block the vocal sound of the answer.

It can be expected that the action of outputting the vocal sound of the robot 100 brings the following effects to the user 10.
· Concentrate on answer explanation
· Relax and make it easier to hear
· Liven up atmosphere
· Excite
· Relieve difficulty of answer explanation

The action of taking the gesture of the robot 100 and the action of outputting the vocal sound are not limited to a case in which either of the actions is executed, and the action determination unit 236 may determine to execute both the actions in combination.

In the above description, the case in which the answer explanation of the robot 100 is long has been described as an example, but the invention is not limited thereto, and can be applied to, for example, a case in which the time required for the user 10 to understand is long or a case in which the user 10 is silent.

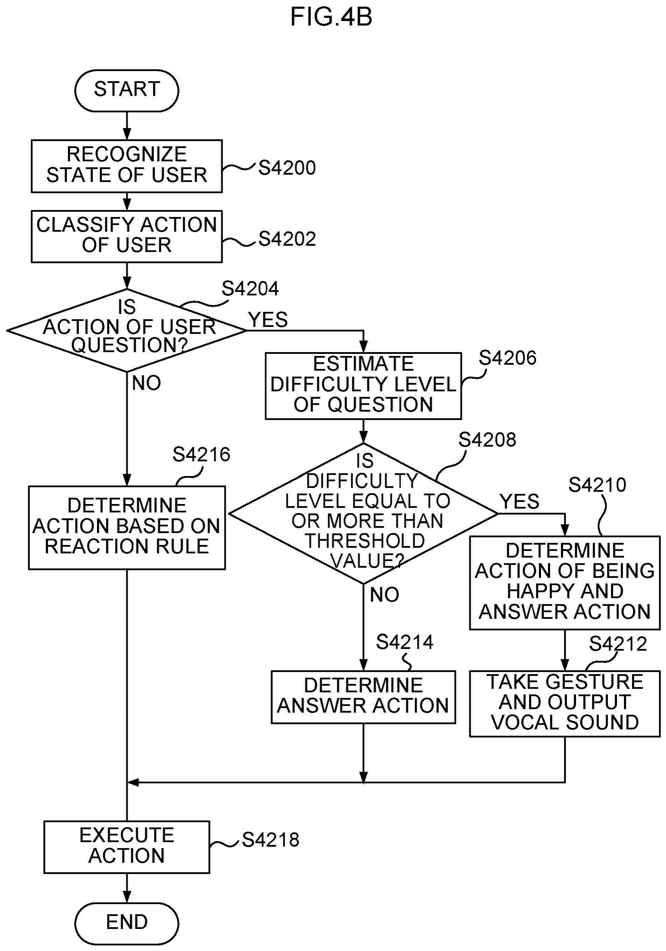

An operation of the robot 100 according to the present embodiment will be described below. The robot 100 executes action determination processing illustrated in Fig. 4B. The processing in the robot 100 is executed in a manner that a CPU 1212 functions as the user state recognition unit 230, the action recognition unit 232, the difficulty level estimation unit 234, the action determination unit 236, the action control unit 250, and the communication processing unit 280.

Fig. 4B is a flowchart illustrating the action determination processing of the robot 100.

The CPU 1212 repeatedly executes the flowchart illustrated in Fig. 4B.

First, in Step S4200, the CPU 1212 recognizes the state of the user 10 based on the information analyzed by the sensor module unit 210.

In Step S4202, the CPU 1212 recognizes the action classification of the user 10 based on the information analyzed by the sensor module unit 210 and the state of the user 10 recognized by the user state recognition unit 230.

In Step S4204, the CPU 1212 determines whether or not the action classification of the user 10 recognized in Step S4202 is "questioning". In a case in which the CPU 1212 determines that the action classification of the user 10 recognized in Step S4202 is "questioning" (Step S4204: YES), the processing proceeds to Step S4206. In a case in which the CPU 1212 determines that the action classification of the user 10 recognized in Step S4202 is not "questioning" (Step S4204: NO), the processing proceeds to Step S4216.

In Step S4206, the CPU 1212 estimates a score corresponding to the difficulty level of the question based on text information indicating the utterance content of the user 10 in the information analyzed by the sensor module unit 210.

In Step S4208, the CPU 1212 determines whether or not the score corresponding to the difficulty level of the question, which has been estimated in Step S4206, is equal to or more than a threshold value. In a case in which the CPU 1212 determines that the score corresponding to the difficulty level of the question, which has been estimated in Step S4206, is equal to or more than the threshold value (Step S4208: YES), the processing proceeds to Step S4210. In a case in which the CPU 1212 determines that the score corresponding to the difficulty level of the question, which has been estimated in Step S4206, is not equal to or more than the threshold value, that is, less than the threshold value (Step S4208: NO), the processing proceeds to Step S4214.

In Step S4210, the CPU 1212 determines, as the action to be executed, an action of being pleased to be questioned by the user 10 and an action of answering the question.

In Step S4212, the CPU 1212 determines an action of taking a gesture and an action of outputting a vocal sound as the action to be executed. Both or either one of the actions may be determined.

In Step S4214, the CPU 1212 determines an action of answering a question as an action to be executed based on the reaction rule 221.

In Step S4216, the CPU 1212 determines an action of the robot 100 based on the action of the user recognized by the action recognition unit 232 and the reaction rule 221.

In Step S4218, the action control unit 250 controls the control target 252 based on the action determined by the action determination unit 236. The CPU 1212 ends the processing of the flowchart.

### [Fourth Embodiment]

A fourth embodiment is characterized in that, in a case in which the robot 100 is questioned by the user 10, an answer mode of the robot 100 is switched based on the state of the user 10 and the question content. The answer mode includes various modes such as "conversation mode", "study mode", "work mode", and "consultation mode", and the robot 100 changes the answer content depending on the answer mode. By changing the threshold value of the score for the difficulty level of the question depending on the answer mode, the action corresponding to the emotion value of the robot 100 becomes different.

Multiple types of questions are assumed as the question of the user 10 from a frank case to a case corresponding to a business scene. The robot 100 needs to show an answer that meets expectations of the user 10 or an answer that does not make the user feel out of place.

Therefore, in the present embodiment, by switching the answer mode of the robot 100 based on the state of the user 10 and the question content, the robot 100 can show an answer suitable for the state of the user 10 including the surrounding situation of the user 10 and the question content.

Hereinafter, differences from the first embodiment will be described. The same components are denoted by the same reference signs, and a detailed description thereof will be omitted.

The action determination unit 236 determines an action of the robot 100 based on the state and the action of the user 10 recognized by the state recognition unit 230 and the action recognition unit 232 and the reaction rule 221. At this time, in a case in which the action of the user 10 is "questioning", the robot 100 switches the answer mode and determines one mode.

The difficulty level estimation unit 234 estimates a score corresponding to the difficulty level of the question, and determines whether or not the score is equal to or more than the threshold value. A different threshold value is set for each answer mode. The case in which the score corresponding to the difficulty level estimated by the difficulty level estimation unit 234 is equal to or more than the threshold value is a case in which the difficulty level of the question of the user 10 is high.

Examples of types of answer modes switched by the robot 100 include "conversation mode", "study mode", "work mode", and "consultation mode". The types of answer modes are not limited to these examples.

Here, a case of switching to each answer mode will be exemplified below.

Examples of the case in which the robot 100 switches the answer mode to "conversation mode" include a state in which a plurality of users 10 are present and have a chat, a case in which the user 10 looks for a conversation partner by himself/herself, a case in which the user 10 talks to him/her frankly, and a case in which the question content of the user 10 is about daily life. The user 10 may manually switch to "conversation mode".

Examples of the case in which the robot 100 switches the answer mode to "study mode" include a case in which the user 10 is in a state of studying, a case in which the user 10 is in a state of taking a class, and a case in which the user 10 asks a question about study. The user 10 may manually switch to "study mode".

Examples of the case in which the robot 100 switches the answer mode to "work mode" include a case in which the user 10 is in a state of working, a case in which a plurality of users 10 are present and talk with a work-related person, a case in which the user 10 talks to the robot 100 in a business manner, and a case in which the question content of the user 10 is work-related. The user 10 may manually switch to "work mode".

Examples of the case in which the robot 100 switches the answer mode to "consultation mode" include a case in which the user 10 is in a worried state, a case in which the user 10 is in a trouble state, a case in which the user 10 is in a depressed state, and a case in which the question content of the user 10 is a consultation. The user 10 may manually switch to "consultation mode".

Here, the answer content of each answer mode, the setting of the threshold value of the difficulty level of the question, and the action of the robot 100 associated therewith will be described below.

In a case in which the robot 100 is in "conversation mode", the robot 100 answers a question of the user 10 in a frank manner. In "conversation mode", the threshold value of the score corresponding to the difficulty level of the question is set to be low, so that the robot 100 can easily take an action that is a reaction for enjoying that the user 10 has asked a difficult question or a boastful action. Since the threshold value of the score corresponding to the difficulty level of the question is set to be low, the emotion value of the robot 100 is likely to be a high value of "happiness" or "pleasure".

In a case in which the robot 100 is in "study mode", the robot 100 answers a question of the user 10 to perform teaching. In "study mode", the threshold value of the score corresponding to the difficulty level of the question is set to be high, so that it becomes difficult for the robot 100 to take an action that is a happy reaction or a boastful action. Since the threshold value of the score corresponding to the difficulty level of the question is set to be high, the emotion value of the robot 100 is likely to be a low value of "happiness" or "pleasure".

In a case in which the robot 100 is in "work mode", the robot 100 politely answers a question of the user 10 or answers with business-like words. In "work mode", the threshold value of the score corresponding to the difficulty level of the question is set to be high, so that the robot 100 becomes difficult to take an action that is a happy reaction or a boastful action. A vocal sound, a motion, and the like at the time of taking a happy action are to be output moderately. Since the threshold value of the score corresponding to the difficulty level of the question is set to be high, the emotion value of the robot 100 is likely to be a low value of "happiness" or "pleasure".

In a case in which the robot 100 is in "consultation mode", the robot 100 provides a sympathetic answer to the question of the user 10. In "consultation mode", the threshold value of the score corresponding to the difficulty level of the question is set to the maximum value, so that the robot 100 does not take an action that is a happy reaction or a boastful action. Since the threshold value of the score corresponding to the difficulty level of the question is set to the maximum value, the emotion value of the robot 100 does not take the value of "happiness" or "pleasure".

Other types of modes other than the above examples can be added to the answer mode of the robot 100.

For example, there are "child mode" in which an explanatory expression of an answer is simplified so that even an elementary school student can understand, "love mode" in which the robot 100 fully becomes a partner and makes a dialogue with the user, "pet mode" in which the robot 100 fully becomes an animal other than a human such as a dog and deals with the animal, and the like.

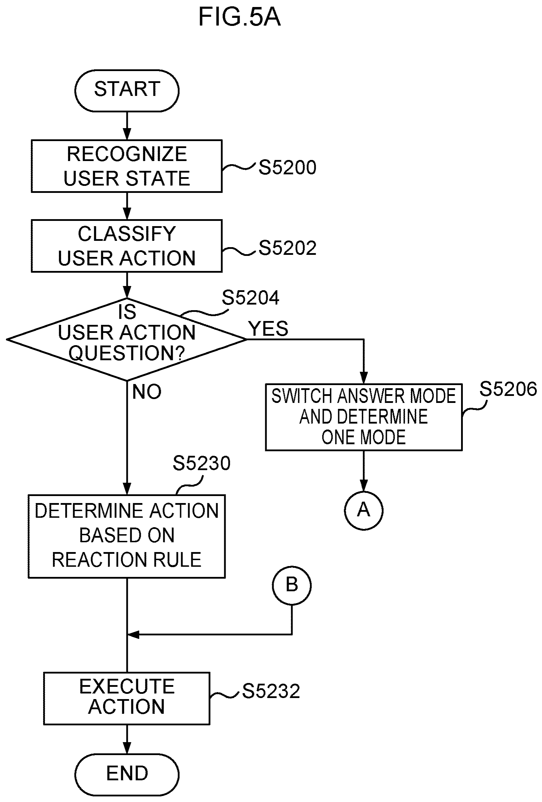

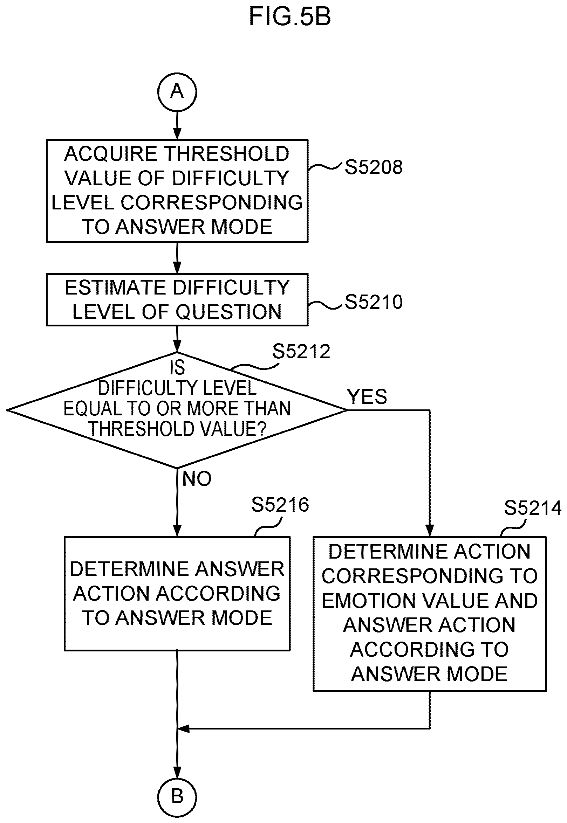

An operation of the robot 100 according to the present embodiment will be described below. The robot 100 executes action determination processing illustrated in Figs. 5A and 5B. The processing in the robot 100 is executed in a manner that a CPU 1212 functions as the user state recognition unit 230, the action recognition unit 232, the difficulty level estimation unit 234, the action determination unit 236, the action control unit 250, and the communication processing unit 280.

Figs. 5A and 5B are flowcharts illustrating the action determination processing of the robot 100 according to the fourth embodiment.

The CPU 1212 repeatedly executes the flowcharts illustrated in Figs. 5A and 5B.

First, in Step S5200, the CPU 1212 recognizes the state of the user 10 based on the information analyzed by the sensor module unit 210.

In Step S5202, the CPU 1212 recognizes the action classification of the user 10 based on the information analyzed by the sensor module unit 210 and the state of the user 10 recognized by the user state recognition unit 230.

In Step S5204, the CPU 1212 determines whether or not the action classification of the user 10 recognized in Step S5202 is "questioning". In a case in which the CPU 1212 determines that the action classification of the user 10 recognized in Step S5202 is "questioning" (Step S5204: YES), the processing proceeds to Step S5206. In a case in which the CPU 1212 determines that the action classification of the user 10 recognized in Step S5202 is not "questioning" (Step S5204: NO), the processing proceeds to Step S5230.

In Step S5206, the CPU 1212 switches the answer mode of the robot 100 and determines one mode.

Proceeding to Fig. 5B, in Step S5208, the CPU 1212 acquires the threshold value of the score of the difficulty level according to the answer mode of the robot 100.

In Step S5210, the CPU 1212 estimates a score corresponding to the difficulty level of the question based on text information indicating the utterance content of the user 10 in the information analyzed by the sensor module unit 210.

In Step S5212, the CPU 1212 determines whether or not the score corresponding to the difficulty level of the question, which has been estimated in Step S5210, is equal to or more than a threshold value. In a case in which the CPU 1212 determines that the score corresponding to the difficulty level of the question, which has been estimated in Step S5210, is equal to or more than the threshold value (Step S5212: YES), the processing proceeds to Step S5214. In a case in which the CPU 1212 determines that the score corresponding to the difficulty level of the question, which has been estimated in Step S5210, is not equal to or more than the threshold value, that is, less than the threshold value (Step S5212: NO), the processing proceeds to Step S5216.

In Step S5214, the CPU 1212 determines, as the action to be executed, an action corresponding to the emotion value and an action for answering a question. For example, in a case in which the answer mode is "conversation mode", the CPU 1212 determines an action of being pleased to be questioned by the user 10 and an action of answering the question. Here, in a case in which an answer is made to the question, the answer content is determined in accordance with the answer mode. Depending on the answer mode, an action that is a reaction of the robot 100 of being happy is refrained or is suppressed.

In Step S5216, the CPU 1212 determines an action of answering the question as the action to be executed. Here, in a case in which an answer is made to the question, the answer content is determined in accordance with the answer mode.

Returning to Fig. 5A, in Step S5230, the CPU 1212 determines an action of the robot 100 based on the action of the user recognized by the action recognition unit 232 and the reaction rule 221.

In Step S5232, the action control unit 250 controls the control target 252 based on the action determined by the action determination unit 236. The CPU 1212 ends the processing of the flowchart.

As described above, in a case in which the robot 100 answers the question from the user 10, by switching the mode and talking, not only the reception according to the expectation of the user 10 can be performed, but also the position of the robot 100 becomes clear, and the robot 100 can easily create an answer. The robot 100 itself can recognize the role of the robot 100. Data of answer contents and expressions suitable for each answer mode can be accumulated, and learning can be efficiently performed.

Since the answer mode is switched, an inappropriate answer of the robot 100 is reduced, the frequency of getting angry or being sad by the user 10 is reduced, and not only the favorable sensitivity from the user 10 is increased, but also the emotion value of the robot 100 is easily stabilized.

### [Fifth Embodiment]

A fifth embodiment is characterized in that, in a case in which the robot 100 is questioned by the user 10 and switches the answer mode, a fluctuation range of the emotion value that can be taken by the robot 100 is set. By setting the fluctuation range of the emotion value that can be taken by the answer mode, it is possible to suppress the emotion of the robot 100 from being raised. Hereinafter, differences from the fourth embodiment will be described. The same components are denoted by the same reference signs, and a detailed description thereof will be omitted.

Here, an example of the fluctuation range of the emotion of each answer mode will be described below. The fluctuation range can be set in a range up to 0 to 5, 0 indicates not corresponding to the emotion, and as the value becomes closer to 5, the emotion becomes stronger. In the following example, each fluctuation range of "happiness", "anger", "sorrow", and "pleasure" will be described.

In a case in which the robot 100 is in "conversation mode", it is desirable that the robot 100 cope brightly. Therefore, as the fluctuation range of each emotion of the robot 100, for example, "happiness" is set to be 3 to 5, "anger" is set to 0, "sorrow" is set to 0, and "pleasure" is set to be 3 to 5, and the robot 100 is prevented from having emotions beyond each range.

In a case in which the robot 100 is in "study mode", the robot 100 is desired to teach earnestly. Therefore, as the fluctuation range of each emotion of the robot 100, for example, "happiness" is set to be 0 to 3, "anger" is set to be 0 to 2, "sorrow" is set to be 0 to 2, and "pleasure" is set to be 0 to 3, and the robot 100 is prevented from having emotions beyond each range.

In a case in which the robot 100 is in "work mode", the robot 100 is desired to respond respectfully. Therefore, as the fluctuation range of each emotion of the robot 100, for example, "happiness" is set to be 0 to 2, "anger" is set to be 0 to 2, "sorrow" is set to 0, and "pleasure" is set to be 0 to 1, and the robot 100 is prevented from having emotions beyond each range.

In a case in which the robot 100 is in "consultation mode", the robot 100 is desired to provide a sympathetic response. Therefore, as the fluctuation range of each emotion of the robot 100, for example, "happiness" is set to be 0 to 1, "anger" is set to 0, "sorrow" is set to be 0 to 2, and "pleasure" is set to 0, and the robot 100 is prevented from having emotions beyond each range.

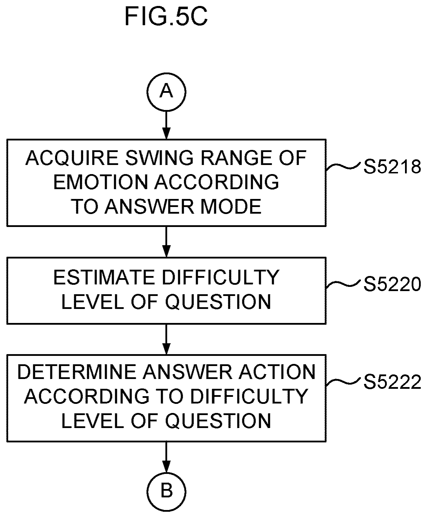

An operation of the robot 100 according to the present embodiment will be described below. The robot 100 executes action determination processing illustrated in Figs. 5A and 5C. The processing in the robot 100 is executed in a manner that a CPU 1212 functions as the user state recognition unit 230, the action recognition unit 232, the difficulty level estimation unit 234, the action determination unit 236, the action control unit 250, and the communication processing unit 280.

Figs. 5A and 5C are flowcharts illustrating the action determination processing of the robot 100 according to the fifth embodiment.

The CPU 1212 repeatedly executes the flowcharts illustrated in Fig. 5A and 5C.

First, in Step S5200, the CPU 1212 recognizes the state of the user 10 based on the information analyzed by the sensor module unit 210.

In Step S5202, the CPU 1212 recognizes the action classification of the user 10 based on the information analyzed by the sensor module unit 210 and the state of the user 10 recognized by the user state recognition unit 230.

In Step S5204, the CPU 1212 determines whether or not the action classification of the user 10 recognized in Step S5202 is "questioning". In a case in which the CPU 1212 determines that the action classification of the user 10 recognized in Step S5202 is "questioning" (Step S5204: YES), the processing proceeds to Step S5206. In a case in which the CPU 1212 determines that the action classification of the user 10 recognized in Step S5202 is not "questioning" (Step S5204: NO), the processing proceeds to Step S5230.

In Step S5206, the CPU 1212 switches the answer mode of the robot 100 and determines one mode.

Proceeding to Fig. 5C, in Step S5218, the CPU 1212 acquires the fluctuation range of the emotion according to the answer mode of the robot 100.

In Step S5220, the CPU 1212 estimates a score corresponding to the difficulty level of the question based on text information indicating the utterance content of the user 10 in the information analyzed by the sensor module unit 210.

In Step S5222, the CPU 1212 determines, as the action to be executed, an action corresponding to the difficulty level of the question and an action of answering the question. For example, in a case in which the answer mode is "conversation mode", the CPU 1212 determines the emotion of the robot 100 within the fluctuation range of the emotion acquired in Step S5218, and determines an action of answering the question. In particular, in the present embodiment, the emotion value of the robot 100 is set to a value that does not deviate from the fluctuation range of the emotion. For example, in "conversation mode" in which the fluctuation range of "pleasure" is set to be 3 to 5, in a case in which the emotion value of the robot 100 is "1" outside the range of the fluctuation range, the emotion of the robot 100 is increased to be "3" which is the lower limit of the fluctuation range. For example, in "work mode" in which the fluctuation range of "pleasure" is set to be 0 to 1, in a case in which the emotion value of the robot 100 is "5" outside the range of the fluctuation range, the emotion of the robot 100 is suppressed to be "1" which is the upper limit value of the fluctuation range.

The emotion value of the robot 100 may change depending on the difficulty level of the question. For example, the emotion value may be multiplied by a predetermined coefficient in each answer mode so that the emotion of the robot 100 falls within the fluctuation range of the emotion.

Here, in a case in which an answer is made to the question, the answer content is determined in accordance with the answer mode. In the present embodiment, for example, depending on the answer mode, the fluctuation range of the emotion of happiness" or "pleasure" of the robot 100 is set to be narrow.

Returning to Fig. 5A, in Step S5230, the CPU 1212 determines an action of the robot 100 based on the action of the user recognized by the action recognition unit 232 and the reaction rule 221.

In Step S5232, the action control unit 250 controls the control target 252 based on the action determined by the action determination unit 236. The CPU 1212 ends the processing of the flowchart.

As described above, since the fluctuation range of the emotion that can be taken by the robot 100 is set for each answer mode, it is possible to prevent the robot 100 from being excessively excited or showing a reaction that is not suitable for a scene.

### [Sixth Embodiment]

A sixth embodiment is characterized in that, in a case in which the robot 100 is questioned by the user 10 and switches the answer mode, an emotion map which will be described later is used as the type of emotion that can be taken by the robot 100. Hereinafter, differences from the fifth embodiment will be described. The same components are denoted by the same reference signs, and a detailed description thereof will be omitted.

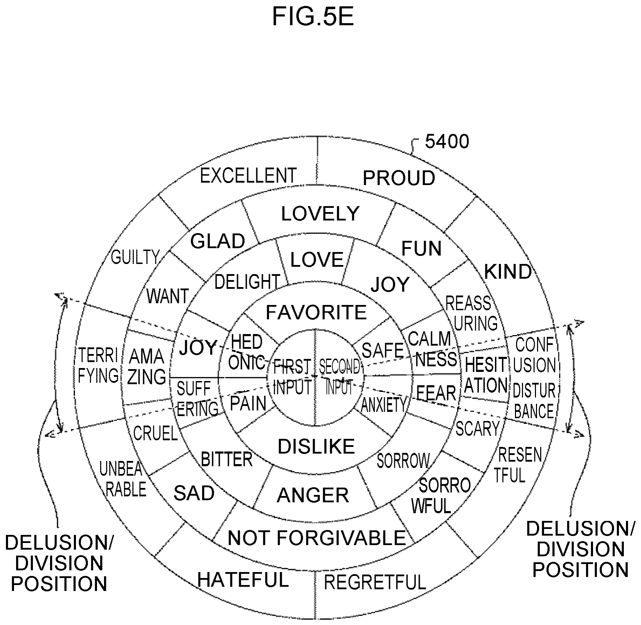

Fig. 5E is a diagram illustrating an emotion map 5400 on which a plurality of emotions are mapped.

In the emotion map 5400, emotions are arranged concentrically radially from the center. The closer to the center of the concentric circle, the more the emotion of the primitive state is arranged. Emotions indicating states and actions generated from the state of mind are arranged outside the concentric circle. The emotion is a concept including a feeling and a mental state. On the left side of the concentric circle, emotions generated from reactions generally occurring in the brain are arranged. On the right side of the concentric circle, emotions induced by situation determination are generally arranged. In the upward and downward directions of the concentric circles, emotions generated from reactions generally occurring in the brain and induced by situation determination are arranged. The emotion of "enjoyment" is arranged on the upper side of the concentric circle, and the emotion of "discomfort" is arranged on the lower side. As described above, in the emotion map 5400, a plurality of emotions are mapped based on a structure in which emotions are generated, and emotions that are likely to occur at the same time are mapped close to each other.

In the present embodiment, after the user 10 asks a question and the answer mode is switched, the emotion of the robot 100 is determined by using the data of the emotion map 5400.

For example, in a case in which the user 10 consults the robot 100 and the robot 100 switches to "consultation mode", the robot 100 may first feel relieved and switch to a gentle feeling while giving an advice.

Although the robot 100 feels gentle, the robot 100 may feel sad because the content of the next consultation of the user 10 is very heavy, or the robot 100 may not be able to advise a solution due to a high difficulty level of the question of the consultation and may not be able to endure the question.

As described above, the robot 100 displays any emotion in the emotion map 5400 or changes the type of emotion.

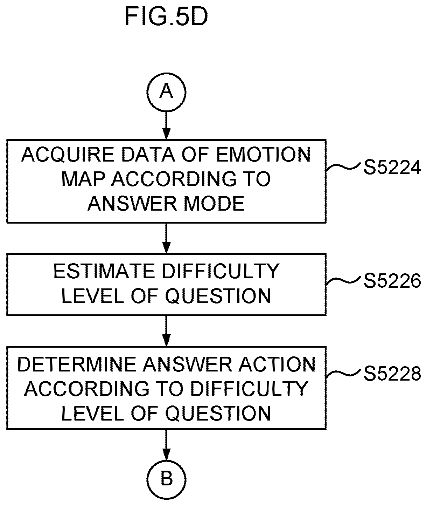

An operation of the robot 100 according to the present embodiment will be described below. The robot 100 executes action determination processing illustrated in Figs. 5A and 5D. The processing in the robot 100 is executed in a manner that a CPU 1212 functions as the user state recognition unit 230, the action recognition unit 232, the difficulty level estimation unit 234, the action determination unit 236, the action control unit 250, and the communication processing unit 280.

Figs. 5A and 5D are flowcharts illustrating the action determination processing of the robot 100 according to the sixth embodiment.

The CPU 1212 repeatedly executes the flowcharts illustrated in Figs. 5A and 5D.

First, in Step S5200, the CPU 1212 recognizes the state of the user 10 based on the information analyzed by the sensor module unit 210.

In Step S5202, the CPU 1212 recognizes the action classification of the user 10 based on the information analyzed by the sensor module unit 210 and the state of the user 10 recognized by the user state recognition unit 230.

In Step S5204, the CPU 1212 determines whether or not the action classification of the user 10 recognized in Step S5202 is "questioning". In a case in which the CPU 1212 determines that the action classification of the user 10 recognized in Step S5202 is "questioning" (Step S5204: YES), the processing proceeds to Step S5206. In a case in which the CPU 1212 determines that the action classification of the user 10 recognized in Step S5202 is not "questioning" (Step S5204: NO), the processing proceeds to Step S5230.

In Step S5206, the CPU 1212 switches the answer mode of the robot 100 and determines one mode.

Proceeding to Fig. 5D, in Step S5224, the CPU 1212 acquires data of the emotion map corresponding to the answer mode of the robot 100. The data of the emotion map is determined in a range of an orientation from the center and a distance from the center of the emotion map. For example, in a case in which the robot 100 is in "conversation mode", the range of "joy", "pleasant", and "proud" among the emotions arranged at the same angle as the angle of 30 degrees from the vertically upper side of the emotion map of Fig. 5 is acquired as the data of the emotion map. Depending on the answer mode, a plurality of ranges having different orientations from the center of the emotion map may be acquired.

In Step S5226, the CPU 1212 estimates a score corresponding to the difficulty level of the question based on text information indicating the utterance content of the user 10 in the information analyzed by the sensor module unit 210.

In Step S5228, the CPU 1212 determines, as the action to be executed, an action corresponding to the difficulty level of the question and an action of answering the question. For example, in a case in which the answer mode is "conversation mode", the CPU 1212 determines the emotion of the robot 100 with the data of the emotion map acquired in Step S5224, and determines an action of answering the question. For example, in a case in which the emotion value of the robot 100 is high, the emotion of "proud" is determined, and in a case in which the emotion value is low, the emotion is determined with the lower limit of "joy" (not determined as "favorite" that falls outside the range of the emotion).

The type of emotion of the robot 100 may change depending on the difficulty level of the question. Here, in a case in which an answer is made to the question, the answer content is determined in accordance with the answer mode.

Returning to Fig. 5A, in Step S5230, the CPU 1212 determines an action of the robot 100 based on the action of the user recognized by the action recognition unit 232 and the reaction rule 221.

In Step S5232, the action control unit 250 controls the control target 252 based on the action determined by the action determination unit 236. The CPU 1212 ends the processing of the flowchart.

### [Seventh Embodiment]

A seventh embodiment is characterized by a response action taken by the robot 100 in response to a case in which any of users answers before an answer of the robot 100 in a case in which the robot 100 is questioned by the user. Hereinafter, differences from the first embodiment will be described. The same components are denoted by the same reference signs, and a detailed description thereof will be omitted.

The robot 100 not only has a conversation with the user 10, provides a video to the user 10, and answers to a question of the user, but also takes a response action such as showing correctness or incorrectness or making a reaction to the answer of the user.

For example, in a case in which the robot 100 is questioned by the user 10a, and the user 10b answers before the robot 100, the robot 100 not only shows correctness or incorrectness to the answer, but also performs a reaction according to the attitude of the user 10a or the user 10b.

The robot 100 provides a conversation with the user 10, a video to the user 10, and the like in cooperation with the server 300 and the like that can communicate via a communication network 20. For example, the robot 100 not only learns appropriate conversational skills by itself, but also performs learning so that a conversation with the user 10 can proceed more appropriately in cooperation with the server 300. The robot 100 causes the server 300 to record the captured video data and the like of the user 10, requests the server 300 to transmit the video data and the like if necessary, and provides the video data and the like to the user 10.

As an example of an action determination model, the robot 100 stores a rule defining an action to be executed by the robot 100 based on the emotion of the user 10, the emotion of the robot 100, and the action of the user 10, and performs various actions in accordance with the rule.

Specifically, the robot 100 includes, as an example of an action determination model 223, a reaction rule for determining an action of the robot 100 based on the emotion of the user 10, the emotion of the robot 100, and the action of the user 10. In the reaction rule, for example, in response to a case in which the action of the user 10 is "laughing", an action of "laughing" is defined as the action of the robot 100. In the reaction rule, in response to a case in which the action of the user 10 is "getting angry", an action of "apologizing" is defined as the action of the robot 100. In the reaction rule, in response to a case in which the action of the user 10 is "questioning", an action of "answering" is defined as the action of the robot 100. In the reaction rule, an action of "showing a correct answer" is set as the action of the robot 100 in response to a case in which the action of the user 10 is "answering". In the reaction rule, in response to a case in which the action of the user 10 is "being sad", an action of "making a sound" is defined as the action of the robot 100.

In a case in which the robot 100 recognizes that the action of the user 10 is "getting angry" based on the reaction rule, the robot selects the action of "apologizing" defined in the reaction rule, as the action to be executed by the robot 100. For example, in a case of selecting the action of "apologizing", the robot 100 performs an "apologizing" action and outputs a vocal sound representing a word of "apologizing".

In a case in which a condition that the emotion of the robot 100 is "normal" (that is, "happiness" =0, "anger" =0, "sorrow" =0, and "pleasure" =0) and the state of the user 10 is "one person looks lonely" is satisfied, the change content of the emotion that the emotion of the robot 100 is "worried" is defined and it is defined that the action of "making a sound" can be taken.

In a case in which the robot 100 recognizes that the current emotion of the robot 100 is "normal" and the user 10 is alone in a lonely state based on the reaction rule, the emotion value of "sorrow" of the robot 100 is increased. The robot 100 selects an action of "making a sound" defined in the reaction rule as an action to be executed on the user 10. For example, in a case in which the robot 100 selects the action of "making a sound", the robot 100 converts a word "what's wrong?" indicating that the robot 100 is worried into a worried vocal sound, and outputs the worried vocal sound.

The robot 100 transmits, to the server 300, user reaction information indicating that a positive reaction has been obtained from the user 10 by this action. The user reaction information includes, for example, a user action of "getting angry", an action of the robot 100 of "apologizing", an attribute of the user 10, and that the reaction of the user 10 is positive.

The server 300 stores the user reaction information received from the robot 100. The server 300 receives and stores the user reaction information not only from the robot 100 but also from each of the robot 101 and the robot 102. The server 300 analyzes the user reaction information from the robot 100, the robot 101, and the robot 102, and updates the reaction rule.

The robot 100 receives the updated reaction rule from the server 300 by inquiring of the server 300 about the updated reaction rule. The robot 100 incorporates the updated reaction rule into the reaction rule stored in the robot 100. As a result, the robot 100 can incorporate the reaction rule acquired by the robot 101, the robot 102, or the like into the reaction rule of the robot 100.

In a case in which the robot 100 recognizes that the action of the user 10 is "questioning", the robot 100 uses a sentence generation model. In a case in which any of the users 10 has answered the question from the user 10 earlier than the robot 100, the robot 100 can show whether or not the answer is correct by using the sentence generation model. The sentence generation model may not only execute processing in the CPU 1212 of the robot 100 but also may acquire a result of executing processing outside the robot 100 such as the server 300.

Here, the sentence generation model may be interpreted as an algorithm and an operation for automatic dialogue processing with text. Since the sentence generation model is known as disclosed in, for example, Japanese Patent Application Laid-Open (JP-A) No. 2018-081444 and ChatGPT (Internet search <URL: https://openai.com/blog/chatgpt>), a detailed description thereof will be omitted. Such a sentence generation model is configured by a Large Language Model (LLM).

As described above, the robot 100 has a function of recognizing the action and state of the user 10. Specifically, the robot 100 recognizes the state of whether there are a plurality of users (in the example of Fig. 1, users 10a, 10b, 10c, and 10d) from the video acquired by the camera function and whether the user 10 is playful or serious by analyzing the facial expression of the user. The robot 100 can distinguish not only the utterance content of the user 10 but also which user is uttering, by analyzing the vocal sound of the user 10 acquired by the microphone function. An utterer may be specified by using the camera function. The utterer may be specified by analyzing an utterance direction using a plurality of microphones. The robot 100 can also recognize a state of being playful or serious by analyzing the vocal sound of the user 10. The robot 100 determines an action to be executed by the robot 100 in accordance with the reaction rule of the action determination model 223 based on the recognized action or state of the user 10.

The robot 100 uses the action determination model 223 to determine an action to be executed by the robot 100 based on the action or state of the user 10.

As described above, the action determination model 223 has a reaction rule for determining an action of the robot 100 based on the emotion of the user 10, the emotion of the robot 100, and the action of the user 10. The robot 100 transmits, to the server 300, the reaction information of the user 10 and the emotion value of the robot 100 obtained as a result of repeating the dialogue between the user 10 and the robot 100.

The server 300 stores the user reaction information and the robot emotion value received from the robot 100. The server 300 analyzes the user reaction information not only from the robot 100 but also from the robot 101, the robot 102, and the like, and updates the reaction rule. That is, the action determination model 223 is updated by event processing of the robot 100 or the like.

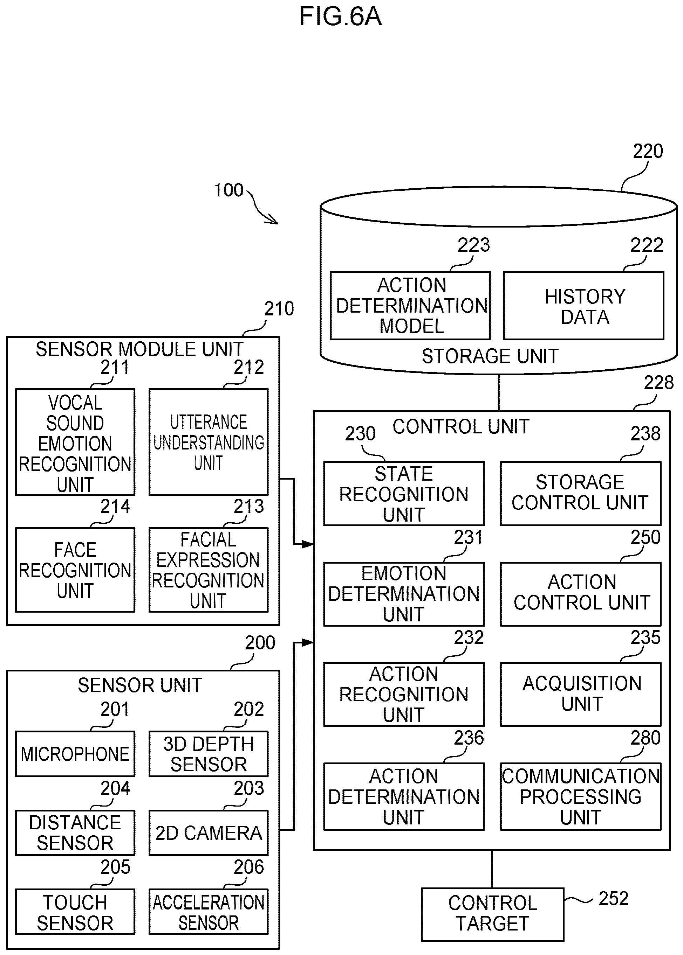

Fig. 6A schematically illustrates a functional configuration of the robot 100 according to the seventh embodiment. The robot 100 includes a sensor unit 200, a sensor module unit 210, a storage unit 220, a control unit 228, and a control target 252. The control unit 228 includes a state recognition unit 230, an emotion determination unit 231, an action recognition unit 232, an acquisition unit 235, an action determination unit 236, a storage control unit 238, an action control unit 250, and a communication processing unit 280.

The sensor unit 200 includes a microphone 201, a 3D depth sensor 202, a 2D camera 203, a distance sensor 204, a touch sensor 205, and an acceleration sensor 206. The microphone 201 continuously detects a vocal sound and outputs vocal sound data. The microphone 201 may be provided on the head of the robot 100 and may have a function of performing binaural recording. The 3D depth sensor 202 detects the contour of an object by continuously emitting an infrared pattern and analyzing the infrared pattern from an infrared image continuously captured by an infrared camera. The 2D camera 203 is an example of an image sensor. The 2D camera 203 captures an image with visible light and generates video information of visible light. The distance sensor emits, for example, a laser, an ultrasonic wave, or the like and detects a distance to the object. The sensor unit 200 may further include a clock, a gyro sensor, a touch sensor, a sensor for motor feedback, and the like.

Among the constituent elements of the robot 100 illustrated in Fig. 6A, the constituent elements other than the control target 252 and the sensor unit 200 are examples of the constituent elements of the action control system of the robot 100. The action control system of the robot 100 controls the control target 252.

The storage unit 220 includes an action determination model 223 and history data 222. The history data 222 includes the action of the user 10, the past emotion value of the user 10, the reaction information of the user, the past emotion value of the robot 100, and the history of the action of the robot 100, and specifically includes a plurality of pieces of event data including the emotion value of the user 10, the emotion value of the robot 100, and the action of the user 10. The data including the action of the user 10 includes a camera image representing the action of the user 10. The emotion value and the history of the action are recorded for each user 10 by being associated with identification information of the user 10, for example. At least a part of the storage unit 220 is implemented by a storage medium such as a memory. A person DB that stores a face image of the user 10, attribute information of the user 10, and the like may be included. Among the constituent elements of the robot 100 illustrated in Fig. 2, the functions of the constituent elements other than the control target 252, the sensor unit 200, and the storage unit 220 can be realized by a CPU operating based on a program. For example, the functions of these constituent elements can be implemented as the operation of the CPU by basic software (OS) and a program operating on the OS.

The sensor module unit 210 includes a vocal sound emotion recognition unit 211, an utterance understanding unit 212, a facial expression recognition unit 213, and a face recognition unit 214. Information detected by the sensor unit 200 is input to the sensor module unit 210. The sensor module unit 210 analyzes information detected by the sensor unit 200 and outputs an analysis result to the state recognition unit 230.

The vocal sound emotion recognition unit 211 of the sensor module unit 210 analyzes the vocal sound of the user 10 detected by the microphone 201 and recognizes the state of the user 10. For example, the vocal sound emotion recognition unit 211 extracts a feature amount such as a frequency component of vocal sound and recognizes the state of the user 10 based on the extracted feature amount. The utterance understanding unit 212 analyzes the vocal sound of the user 10 detected by the microphone 201 and outputs text information indicating the utterance content of the user 10.

The facial expression recognition unit 213 recognizes the facial expression of the user 10 and the emotion of the user 10 from the image of the user 10 captured by the 2D camera 203. For example, the facial expression recognition unit 213 recognizes the facial expression and emotion of the user 10 based on the shapes, positional relationships, and the like of the eyes and the mouth.

The face recognition unit 214 recognizes the face of the user 10. The face recognition unit 214 recognizes the user 10 by matching a face image stored in the person DB (not illustrated) with a face image of the user 10 captured by the 2D camera 203.

The state recognition unit 230 recognizes the state of the user 10 based on the information analyzed by the sensor module unit 210. For example, processing mainly related to perception is performed using the analysis result of the sensor module unit 210. For example, perception information such as "dad is alone." and "the probability that dad is not smiling is 90%." is generated. Processing of understanding the meaning of the generated perception information is performed. For example, semantic information such as "dad is alone and looks lonely" is generated.

The state recognition unit 230 also recognizes whether there are a plurality of users 10 based on the information analyzed by the sensor module unit 210. As illustrated in Fig. 1, in a case in which there are a plurality of users 10a, 10b, 10c, and 10d around the robot 100, the state of each user 10 can be recognized, and the perception information of each user 10 can be generated.

The emotion determination unit 231 determines an emotion value indicating the emotion of the user 10 based on the information analyzed by the sensor module unit 210 and the state of the user 10 recognized by the state recognition unit 230. For example, the information analyzed by the sensor module unit 210 and the recognized state of the user 10 are input to a neural network learned in advance, and the emotion value indicating the emotion of the user 10 is acquired.

Here, the emotion value indicating the emotion of the user 10 is a value indicating whether the emotion of the user is positive or negative. For example, in a case in which the emotion of the user is a bright emotion accompanied with pleasure or comfort, such as "happiness", "pleasure", "enjoyment", "relief", "excitement ", "security", and "fulfillment", a positive value is indicated, and the value becomes larger as the emotion is brighter. In a case in which the emotion of the user is an emotion that makes the user feel unpleasant, such as "anger", "sorrow", "discomfort", "anxiety", "sadness", "worry", and "emptiness", a negative value is indicated, and the absolute value of the negative value increases as the user feels unpleasant more. In a case in which the emotion of the user is not any of the above cases ("normal"), a value of 0 is indicated.

The emotion determination unit 231 determines an emotion value indicating the emotion of the robot 100 based on the information analyzed by the sensor module unit 210, the information detected by the sensor unit 200, and the state of the user 10 recognized by the state recognition unit 230.

The emotion value of the robot 100 includes the emotion value for each of a plurality of emotion classifications, and is, for example, a value (0 to 5) indicating the strength of each of "happiness", "anger", "sorrow", and "pleasure".

Specifically, the emotion determination unit 231 determines the emotion value indicating the emotion of the robot 100 in accordance with a rule for updating the emotion value of the robot 100, which is defined in association with the information analyzed by the sensor module unit 210 and the state of the user 10 recognized by the state recognition unit 230.

For example, in a case in which the state recognition unit 230 recognizes that the user 10 looks lonely, the emotion determination unit 231 increases the emotion value of "sorrow" of the robot 100. In a case in which the state recognition unit 230 recognizes that the user 10 has a laughing face, the emotion value of "happiness" of the robot 100 is increased.

The emotion determination unit 231 may determine the emotion value indicating the emotion of the robot 100 in further consideration of the state of the robot 100. For example, in a case in which the remaining battery level of the robot 100 is low, a case in which the surrounding environment of the robot 100 is dark, or the like, the emotion value of "sorrow" of the robot 100 may be increased. In the case of the user 10 who continuously talks regardless of the low remaining battery level, the emotion value of "anger" may be increased.

The action recognition unit 232 recognizes an action of the user 10 based on the information analyzed by the sensor module unit 210 and the state of the user 10 recognized by the state recognition unit 230. For example, the information analyzed by the sensor module unit 210 and the recognized state of the user 10 are input to a neural network learned in advance, a probability of each of a plurality of predetermined action classifications (for example, "laughing", "getting angry", "questioning", and "being sad") is acquired, and the action classification having the highest probability is recognized as the action of the user 10.

In a case in which the action of the user 10a is recognized as a question, the acquisition unit 235 acquires an action of a correct answer to the question. Specifically, a question is input to the sentence generation model, and answer content is acquired as an output thereof. The acquisition unit 235 acquires, from the sentence generation model, an action indicating a correct or incorrect answer with respect to the answer provided by any of the users 10 before the user 10a is notified of the correct answer. Specifically, an answer provided from one of the users 10 is input to the sentence generation model, and a correct or incorrect answer with respect to the provided answer is acquired.

The action determination unit 236 determines an action corresponding to the action of the user 10 recognized by the action recognition unit 232 based on the current emotion value of the user 10 determined by the emotion determination unit 231, the history data 222 of the past emotion value determined by the emotion determination unit 231 before the current emotion value of the user 10 is determined, and the emotion value of the robot 100. In the present embodiment, a case in which the action determination unit 236 uses one most recent emotion value included in the history data 222 as the past emotion value of the user 10 will be described, but the disclosed technique is not limited to this aspect. For example, the action determination unit 236 may use a plurality of most recent emotion values as the past emotion values of the user 10, or may use emotion values that are earlier by a unit period such as one day before. The action determination unit 236 may determine the action corresponding to the action of the user 10 in further consideration of the history of the past emotion value of the robot 100 in addition to the current emotion value of the robot 100. The action determination unit 236 may determine the action of the robot 100 in further consideration of a history of positive reaction information of the user 10 in response to the action of the robot 100. The action determined by the action determination unit 236 includes a gesture performed by the robot 100 or the utterance content of the robot 100.

In a case in which the robot 100 recognizes that the action of the user 10a is "questioning", and any of the users 10 has answered prior to the robot 100, the action determination unit 236 determines an action indicating correctness or incorrectness of the answer. The action determination unit determines the action of the robot 100 not only to simply indicate the result but also to largely express the result with a gesture or to respond in accordance with the attitude or the energy of the user 10. At that time, the action of the robot 100 may be determined by using the past reaction information of the user 10.

Specifically, the action determination unit 236 determines an action of a response such as a reaction by using the answer content acquired by the acquisition unit 235.

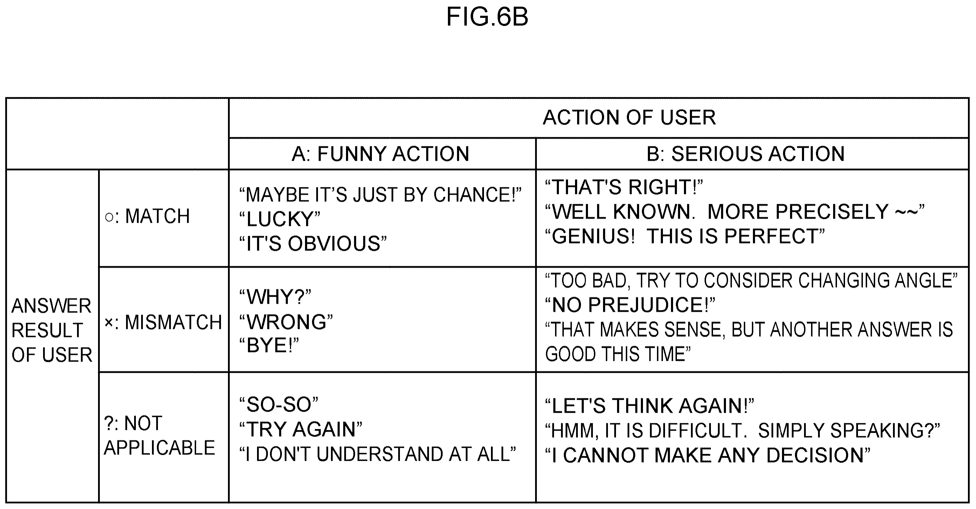

Fig. 6B is a diagram in which an example of utterance of a response action of the robot 100 is collected in variations.

As illustrated in Fig. 6B, the utterance content of the response action of the robot 100 differs depending on whether the answer result of the user 10 matches with the answer prepared by the robot 100, does not match with the answer, or is not applicable to either case. The utterance content of the response action of the robot 100 differs depending on not only the answer result of the user 10 but also the action of the user (whether the user is a funny action or a serious action).

Here, the answer of the user 10 is a case in which the utterer (for example, the user 10a) asks a question to the robot 100 and the other person (for example, the user 10b) answers before the robot 100, or a case in which the utterer (for example, the user 10a) asks a question to the robot 100 and the person who asked a question (the user 10a) answers before the robot 100.

An example of the utterance content illustrated in Fig. 6B will be described below.

In a case in which the answer result of the user 10 matches with the answer prepared by the robot 100 ("∘" in the drawing), and the action of the user 10 is a funny action ( "A" in the drawing), the robot 100 makes an utterance to tease the user 10 such as "it happens!", "lucky!", and "it's obvious".

In a case in which the answer result of the user 10 matches with the answer prepared by the robot 100, and the action of the user 10 is a serious action ("B" in the drawing), the robot 100 makes an utterance to praise the user 10, such as "that's right!", "well known. More precisely ...", "genius! If you can say this much, it's perfect".

In a case in which the answer result of the user 10 does not match with the answer prepared by the robot 100 ("×" in the drawing), and the action of the user 10 is a funny action, the robot 100 makes an utterance to deny the user 10, such as "why?", "no!", or "bye!".

In a case in which the answer result of the user 10 does not match with the answer prepared by the robot 100 and the action of the user 10 is a serious action, the robot 100 makes an utterance of advice to the user 10, such as "too bad, try to consider changing angle" "get rid of prejudice!", or "that makes sense, but another answer is good this time".

In a case in which the answer result of the user 10 is not applicable because the answer result cannot be determined whether or not the answer matches with the answer prepared by the robot 100 ("?" in the drawing), and the action of the user 10 is a funny action, the robot 100 makes an utterance to express confusion to the user 10, such as "so-so", "try again", or "I do not understand at all".

In a case in which the answer result of the user 10 is not applicable because the answer result cannot be determined whether or not the answer matches with the answer prepared by the robot 100, and the action of the user 10 is a serious action, the robot 100 makes an utterance to request the user 10 to reconsider, such as "let's think again!", "hmm, it is difficult. To put it simply?", or "I cannot make any decision".

The robot 100 can make an utterance with a change in attitude and tone between a case in which the answerer (the user 10a or the user 10b in the present case) is a close user who has had a conversation many times and a case in which the answerer is a first-time user.

As the content of the utterance of the response action of the robot 100, the content illustrated in Fig. 6B is an example and is not limited to this content.

Here, the robot 100 can objectively recognize whether the action of the answerer is a funny action or a serious action.

Specifically, the state of the answerer can be identified by the feature amount of the vocal sound detected by the microphone 201 of the sensor unit 200 and recognized by the vocal sound emotion recognition unit 211 and the pattern of the expression of the face that is captured by the 2D camera 203 of the sensor unit 200 and is recognized by the facial expression recognition unit 213.

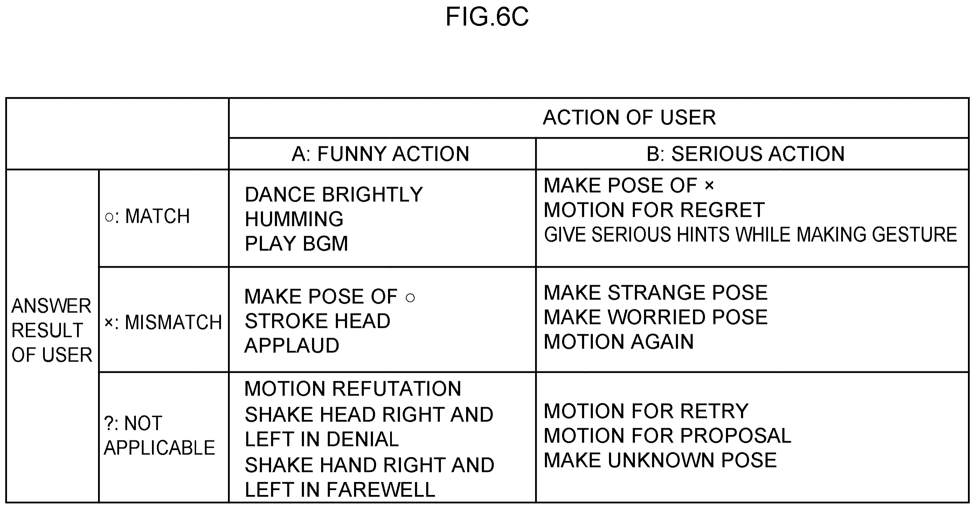

Fig. 6C is a diagram in which an example of motion of a response action of the robot 100 is collected in variations.

As illustrated in Fig. 6C, the utterance content of the response action of the robot 100 differs depending on whether the answer result of the user 10 matches with the answer prepared by the robot 100, does not match with the answer, or is not applicable to either case. The motion of the response action of the robot 100 differs depending on not only the answer result of the user 10 but also the action of the user (whether the action of the user is a funny action or a serious action).

Here, the answer of the user 10 is a case in which the utterer (for example, the user 10a) asks a question to the robot 100 and the other person (for example, the user 10b) answers before the robot 100, or a case in which the utterer (for example, the user 10a) asks a question to the robot 100 and the person who asked a question (the user 10a) answers before the robot 100.

An example of the motion illustrated in Fig. 6C will be described below.

In a case in which the answer result of the user 10 matches with the answer prepared by the robot 100 ("∘" in the drawing), and the action of the user 10 is a funny action ("A" in the drawing), the robot 100 performs a motion of entertaining the user 10 such as "brightly dancing", "humming", or "playing BGM".

In a case in which the answer result of the user 10 matches with the answer prepared by the robot 100, and the action of the user 10 is a serious action ("B" in the drawing), the robot 100 makes a motion of praising the user 10, such as "making a pose of ∘", "stroking the head", or "applauding".

In a case in which the answer result of the user 10 does not match with the answer prepared by the robot 100 ("×" in the drawing) and the action of the user 10 is a funny action, the robot 100 makes a motion of denying the user 10, such as "motioning for refutation", "shaking head left and right in denial", or "shaking hand left and right in farewell".

In a case in which the answer result of the user 10 does not match with the answer prepared by the robot 100, and the action of the user 10 is a serious action, the robot 100 makes a motion of leaning toward the user 10 such as "making a pose of ×", "motioning for regret", or "giving serious hints while making gesture".

In a case in which the answer result of the user 10 is not applicable because the answer result cannot be determined whether or not the answer matches with the answer prepared by the robot 100 ("?" in the drawing), and the action of the user 10 is a funny action, the robot 100 makes a motion of expressing confusion to the user 10, such as "making a strange pose", "making a worried pose", or "motioning again".

In a case in which the answer result of the user 10 is not applicable because the answer result cannot be determined whether or not the answer matches with the answer prepared by the robot 100, and the action of the user 10 is a serious action, the robot 100 makes a motion to request the user 10 to reconsider, such as "motioning for retry", "motioning for proposal", or "making an unknown pose".

The robot 100 can make a motion with a change in attitude and tone between a case in which the answerer (the user 10a or the user 10b in the present case) is a close user who has had a conversation many times and a case in which the answerer is a first user.

As the content of the motion of the response action of the robot 100, the content illustrated in Fig. 6C is an example and is not limited to this content.

As described above, the robot 100 can not only show correctness or incorrectness with respect to the answer of the answerer, but also can act as if the robot 100 pretends to forget the answer and plays around. In this case, in a case in which the robot 100 forgets the answer or pretends not to understand and is pointed out by the user 10, the robot 100 can respond by appearing embarrassed.

As described above, the robot 100 can show a human-like reaction in a case of repeating a question and an answer with the user 10.

The storage control unit 238 determines whether or not to store data including the action of the user 10 in the history data 222 based on the strength of the action predetermined for the action determined by the action determination unit 236 and the emotion value of the robot 100.

Specifically, in a case in which the total value of the sum of the respective emotion values for the plurality of emotion classifications of the robot 100, the strength predetermined for the gesture including the action determined by the action determination unit 236, and the strength predetermined for the utterance content included in the action determined by the action determination unit 236 is equal to or more than a threshold value, it is determined to store the data including the action of the user 10 in the history data 222.

In a case in which the storage control unit 238 determines to store the data including the action of the user 10 in the history data 222, the action determined by the action determination unit 236, the information (for example, any peripheral information such as data such as a vocal sound, an image, and a smell of that place) analyzed by the sensor module unit 210 from the current time point to a certain period before, and the state (for example, the facial expression, emotion, and the like of the user 10) of the user 10 recognized by the state recognition unit 230 are stored in the history data 222.

Since the emotion value of the robot 100 is updated depending on whether the answer of the user 10 is correct or incorrect or the attitude of the user 10, the storage control unit 238 is executed even after the execution of the event processing of the robot 100.

For example, in a case in which the answer of the user 10 is a correct answer, the emotion determination unit 231 determines to increase the emotion value of "happiness" of the robot 100. The storage control unit 238 determines whether or not to store data including the action of the user 10 in the history data 222 based on the updated value. For example, in a case in which the answer of the user 10 is an incorrect answer, the emotion determination unit 231 determines to decrease the emotion value of "happiness" and increase the emotion value of "sorrow" of the robot 100. The storage control unit 238 determines whether or not to store data including the action of the user 10 in the history data 222 based on the updated value.

The action control unit 250 controls the control target 252 based on the action determined by the action determination unit 236. For example, in a case in which the action determination unit 236 determines an action including uttering, the action control unit 250 causes a speaker included in the control target 252 to output a vocal sound. At this time, the action control unit 250 may determine the speaking speed of the vocal sound based on the emotion value of the robot 100. For example, the action control unit 250 determines a higher speaking speed as the emotion value of the robot 100 increases. As described above, the action control unit 250 determines the execution form of the action determined by the action determination unit 236 based on the emotion value determined by the emotion determination unit 231.

The action control unit 250 may control the magnitude of the gesture motion based on the action determined by the action determination unit 236 and in accordance with the magnitude of the emotion value of the robot 100. For example, in a case in which the emotion value of "happiness" of the robot 100 is larger than a preset reference value, control is performed to move the arms further largely as an expression of dance.

The action control unit 250 may recognize a change in emotion of the user 10 in response to execution of the action determined by the action determination unit 236. For example, the change in emotion may be recognized based on the vocal sound or facial expression of the user 10. In addition, the change in emotion of the user 10 may be recognized based on detection of an impact by the touch sensor 205 included in the sensor unit 200. In a case in which an impact is detected by the touch sensor 205 included in the sensor unit 200, it may be recognized that the emotion of the user 10 is worsened. In a case in which it is determined that the reaction of the user 10 is laughing or happy from the detection result of the touch sensor 205 included in the sensor unit 200, it may be recognized that the emotion of the user 10 becomes good. Information indicating the reaction of the user 10 is output to the communication processing unit 280.

After the action control unit 250 executes the action determined by the action determination unit 236 in the execution mode determined according to the emotion of the robot 100, the emotion determination unit 231 further changes the emotion value of the robot 100 based on the reaction of the user to the execution of the action. Specifically, the emotion determination unit 231 increases the emotion value of "happiness" of the robot 100 in a case in which the reaction of the user to the action determined by the action determination unit 236 being performed on the user in the execution form determined by the action control unit 250 is not bad. The emotion determination unit 231 increases the emotion value of "sorrow" of the robot 100 in a case in which the reaction of the user to the action determined by the action determination unit 236 being performed on the user in the execution form determined by the action control unit 250 is bad.

The action control unit 250 expresses the emotion of the robot 100 based on the determined emotion value of the robot 100. For example, in a case in which the emotion value of "happiness" of the robot 100 is increased, the action control unit 250 controls the control target 252 to cause the robot 100 to perform a gesture of being happy. In a case in which the emotion value of "sorrow" of the robot 100 is increased, the action control unit 250 controls the control target 252 so that the posture of the robot 100 becomes a slumped posture.

The communication processing unit 280 handles communication with the server 300. As described above, the communication processing unit 280 transmits the user reaction information to the server 300. The communication processing unit 280 receives the updated reaction rule from the server 300. In a case in which receiving the updated reaction rule from the server 300, the communication processing unit 280 updates the reaction rule as the action determination model 223.

The server 300 performs communication between the robot 100, the robot 101, and the robot 102 and the server 300, receives the user reaction information transmitted from the robot 100, and updates the reaction rule based on the reaction rule including the action for which a positive reaction has been obtained.

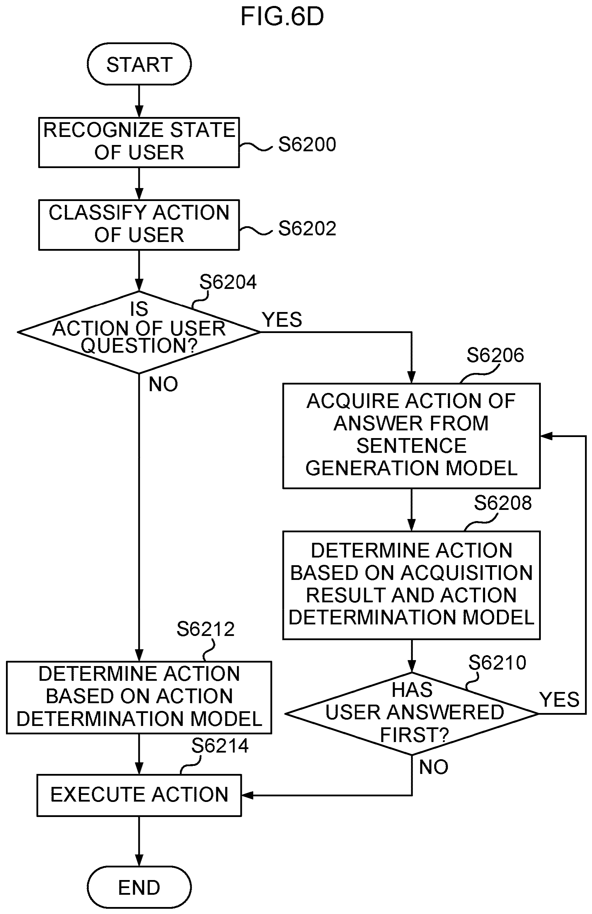

An operation of the robot 100 according to the present embodiment will be described below. The robot 100 executes action determination processing illustrated in Fig. 6D. The processing in the robot 100 is executed by the CPU 1212 functioning as the state recognition unit 230, the emotion determination unit 231, the action recognition unit 232, the acquisition unit 235, the action determination unit 236, the storage control unit 238, the action control unit 250, and the communication processing unit 280.

Fig. 6D is a flowchart illustrating the action determination processing of the robot 100.

The CPU 1212 repeatedly executes the flowchart illustrated in Fig. 6D.

First, in Step S200, the CPU 1212 recognizes the state of the user 10 and the state of the robot 100 based on the information analyzed by the sensor module unit 210.

In Step S6202, the CPU 1212 recognizes the action classification of the user 10 based on the information analyzed by the sensor module unit 210 and the state of the user 10 recognized by the state recognition unit 230.

In Step S6204, the CPU 1212 determines whether or not the action of the user 10 is "questioning". In a case in which it is recognized that the action of the user 10 is "questioning" (Step S6204: YES), the processing proceeds to Step S6206. In a case in which it is recognized that the action of the user 10 is not "questioning" (Step S6204: NO), the processing proceeds to Step S6212.

In Step S6206, the CPU 1212 acquires an action of an answer to the question of the user 10 from the sentence generation model.

In Step S6208, the CPU 1212 determines the action of the robot 100 based on the result (action content of the answer) acquired from the sentence generation model and the action determination model. In a case in which Step S6208 is passed twice or more, the already determined action of the robot 100 is updated based on the latest answer acquired in Step S6206.

In Step S6210, the CPU 1212 determines whether or not the user 10 has answered before the robot 100. In a case in which the user 10 has answered in advance (Step S6210: YES), Step S6206 is executed again. In a case in which the user 10 has not answered in advance (Step S6210: NO), the processing proceeds to Step S6214.

In Step S6212, the CPU 1212 determines the action of the robot 100 based on the action determination model.

In Step S6214, the CPU 1212 executes the action of the robot 101 by controlling the determined action. The CPU 1212 ends the processing of the flowchart.

The robot 100 is an example of an electronic device including the action control system. The application target of the action control system is not limited to the robot 100, and the action control system can be applied to various electronic devices. The function of the server 300 may be implemented by one or more computers. At least some functions of the server 300 may be implemented by a virtual machine. At least some of the functions of the server 300 may be implemented in a cloud.

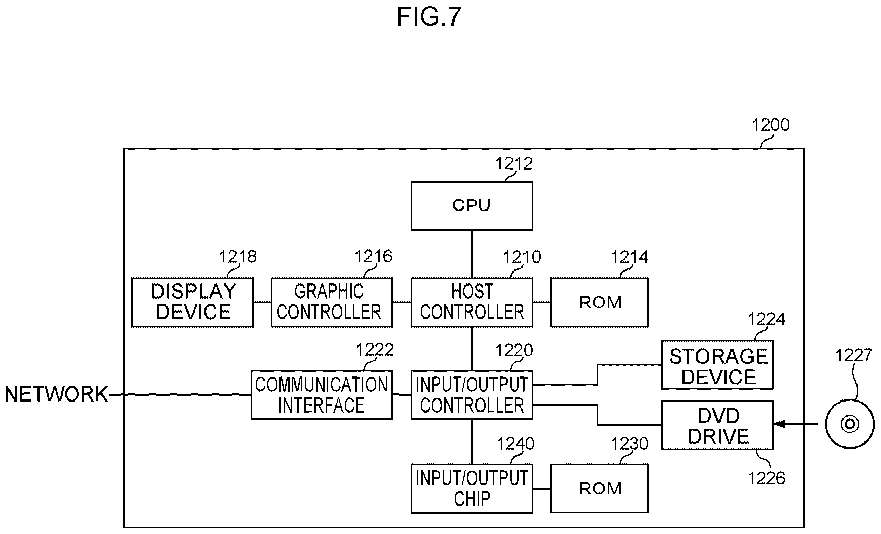

Fig. 7 schematically illustrates an example of a hardware configuration of a computer 1200 that functions as the robot 100 and the server 300. A program installed on the computer 1200 can cause the computer 1200 to function as one or a plurality of "units" of the device according to the present embodiment, or cause the computer 1200 to execute an operation associated with the device according to the present embodiment or the one or plurality of "units" thereof, and/or cause the computer 1200 to execute a process according to the present embodiment or a stage of the process. Such a program may be executed by the CPU 1212 to cause the computer 1200 to perform certain operations associated with some or all of the blocks in the flowcharts and block diagrams described herein.

The computer 1200 according to the present embodiment includes a CPU 1212, a RAM 1214, and a graphic controller 1216, which are mutually connected by a host controller 1210. The computer 1200 also includes input/output units such as a communication interface 1222, a storage device 1224, a DVD drive 1226, and an IC card drive, which are connected to the host controller 1210 via an input/output controller 1220. The DVD drive 1226 may be a DVD-ROM drive, a DVD-RAM drive, or the like. The storage device 1224 may be a hard disk drive, a solid state drive, or the like. The computer 1200 also includes a ROM 1230 and legacy input/output units such as a keyboard, which are connected to the input/output controller 1220 via an input/output chip 1240.

The CPU 1212 operates in accordance with programs stored in the ROM 1230 and the RAM 1214, thereby controlling each unit. The graphics controller 1216 acquires image data generated by the CPU 1212 in a frame buffer or the like provided in the RAM 1214 or itself, and causes the image data to be displayed on the display device 1218.

The communication interface 1222 communicates with other electronic devices via a network. The storage device 1224 stores programs and data used by the CPU 1212 in the computer 1200. The DVD drive 1226 reads a program or data from a DVD-ROM 1227 or the like and provides the program or data to the storage device 1224. The IC card drive reads the program and data from the IC card and/or writes the program and data to the IC card.

The ROM 1230 stores a boot program executed by the computer 1200 at the time of activation and/or a program depending on hardware of the computer 1200, in the ROM 1230. The input/output chip 1240 may also connect various input/output units to the input/output controller 1220 via a USB port, a parallel port, a serial port, a keyboard port, a mouse port, or the like.

The program is provided by a computer-readable storage medium such as the DVD-ROM 1227 or an IC card. The program is read from a computer-readable storage medium, installed in the storage device 1224, the RAM 1214, or the ROM 1230, which are also examples of a computer-readable storage medium, and executed by the CPU 1212. The information processing described in the programs is read by the computer 1200 and provides cooperation between the programs and the various types of hardware resources. The device or method may be configured by implementing operation or processing of information in accordance with use of the computer 1200.

For example, in a case in which communication is performed between the computer 1200 and an external device, the CPU 1212 may execute a communication program loaded in the RAM 1214 and instruct the communication interface 1222 to perform communication processing based on processing described in the communication program. Under the control of the CPU 1212, the communication interface 1222 reads transmission data stored in a transmission buffer area provided in the recording medium such as the RAM 1214, the storage device 1224, the DVD-ROM 1227, or the IC card, transmits the read transmission data to the network, or writes reception data received from the network to a reception buffer area or the like provided on the recording medium.

The CPU 1212 may cause the RAM 1214 to read the entirety or a necessary portion of a file or database stored in an external recording medium such as the storage device 1224, the DVD drive 1226 (DVD-ROM 1227), an IC card, or the like, and may execute various types of processing on data on the RAM 1214. The CPU 1212 may then write back the processed data to the external recording medium.

Various types of information such as various types of programs, data, tables, and databases may be stored in a recording medium and subjected to information processing. The CPU 1212 may execute various types of processing on the data read from the RAM 1214, including various types of operations, information processing, condition determination, conditional branching, unconditional branching, information retrieval/replacement, and the like, which are described throughout the present disclosure and designated by an instruction sequence of a program, and write back the results to the RAM 1214. The CPU 1212 may search for information in a file, a database, or the like in the recording medium. For example, in a case in which a plurality of entries each having the attribute value of the first attribute associated with the attribute value of the second attribute are stored in the recording medium, the CPU 1212 may search for an entry in which the attribute value of the first attribute matches with the specified condition from the plurality of entries, read the attribute value of the second attribute stored in the entry, and thereby acquire the attribute value of the second attribute associated with the first attribute satisfying the predetermined condition.

The programs or software modules described above may be stored in a computer-readable storage medium on the computer 1200 or near the computer 1200. A recording medium such as a hard disk or a RAM provided in a server system connected to a dedicated communication network or the Internet can be used as the computer-readable storage medium, thereby providing a program to the computer 1200 via the network.

The blocks in the flowcharts and block diagrams in the present embodiment may represent stages of a process in which an operation is performed or "units" of a device that is responsible for performing the operation. Specific stages and "units" may be implemented by a dedicated circuit, a programmable circuit provided with computer-readable instructions stored on a computer-readable storage medium, and/or a processor provided with computer-readable instructions stored on a computer-readable storage medium. The dedicated circuit may include a digital and/or analog hardware circuit, and may include an integrated circuit (IC) and/or a discrete circuit. The programmable circuit may include a reconfigurable hardware circuit including, for example, logical products, disjunction, exclusive disjunction, NAND, NOR, and other logical operations, flip-flops, registers, and memory elements, such as field programmable gate arrays (FPGAs) and programmable logic arrays (PLAs).

A computer-readable storage medium may include any tangible device capable of storing instructions for execution by a suitable device, and as a result, a computer-readable storage medium having instructions stored therein includes an article including instructions that may be executed to create means for performing the operations specified in the flowcharts or block diagrams. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-Ray disk, a memory stick, an integrated circuit card, and the like.

The computer-readable instructions may include source code or object code written in any combination of one or more programming languages, including assembler instructions, instruction set architecture (ISA) instructions, machine instructions, machine-dependent instructions, microcode, firmware instructions, state-setting data, or an object oriented programming language such as Smalltalk, JAVA (registered trademark), C++, or the like, and conventional procedural programming languages, such as the "C" programming language or similar programming languages.

The computer-readable instructions may be provided for a processor of a general purpose computer, special purpose computer, or other programmable data processing device, or programmable circuit, either locally or over a wide area network (WAN), such as a local area network (LAN), the Internet, or the like, to cause the processor or programmable circuit of the general purpose computer, special purpose computer, or other programmable data processing device to execute the computer-readable instructions to generate means for the processor or programmable circuit to perform the operations specified in the flowcharts or block diagrams. Examples of the processor include a computer processor, a processing unit, a microprocessor, a digital signal processor, a controller, a microcontroller, and the like.

Although the invention has been described using the embodiments, the technical scope of the invention is not limited to the scope described in the above embodiments. It is apparent to those skilled in the art that various modifications or improvements can be made to the above embodiments. It is apparent from the description of the claims that modes to which such changes or improvements are added can also be included in the technical scope of the invention.

It should be noted that the order of execution of each processing such as operations, procedures, steps, and stages in the devices, systems, programs, and methods illustrated in the claims, the specification, and the drawings can be realized in any order unless "before", "prior to", or the like is explicitly stated, and unless the output of the previous processing is used in the later processing. Even though the operation flow in the claims, the specification, and the drawings is described using "first", "next", and the like for convenience, it does not mean that it is essential to perform in this order.

The disclosures of Japanese Patent Application No. 2023-039084, Japanese Patent Application No. 2023-088896, Japanese Patent Application No. 2023-090252, Japanese Patent Application No. 2023-103691, Japanese Patent Application No. 2023-111715, and Japanese Patent Application No. 2023-121154 are incorporated herein by reference in their entireties.

All documents, patent applications, and technical standards described in this specification are incorporated herein by reference to the same extent as if each individual document, patent application, and technical standard have been specifically and individually described to be incorporated by reference.

## Claims

1. An action control system comprising:
an action recognition unit that recognizes an action of a user;
a difficulty level estimation unit that estimates a difficulty level of a question in a case in which the action of the user is recognized as the question; and
an action determination unit that determines an action of enjoying being questioned by the user and an action of answering the question, as an action to be executed, in a case in which a score corresponding to the difficulty level is equal to or more than a threshold value.

2. The action control system according to claim 1, wherein the action determination unit determines an action of enjoying being questioned by the user and an action of answering the question, as the action to be executed, in a case in which an accumulated value of the score is equal to or more than a threshold value, or in a case in which a number of times of the score corresponding to the difficulty level being equal to or more than the threshold value is equal to or more than a predetermined number of times.

3. The action control system according to claim 1, wherein the difficulty level estimation unit estimates a difficulty level of a question in consideration of an age of the user.

4. The action control system according to claim 3, wherein the difficulty level estimation unit reduces the difficulty level of the question to be estimated as the age of the user decreases.

5. The action control system according to claim 3, wherein the difficulty level estimation unit sets the difficulty level of the question to be estimated to be constant in a case in which the age of the user exceeds a predetermined threshold value.

6. An action control system comprising:
an action recognition unit that recognizes an action of a user;
a difficulty level estimation unit that estimates a difficulty level of a question in a case in which the action of the user is recognized as the question; and
an action determination unit that determines an action of enjoying being questioned by the user and an action of answering the question, as an action to be executed, in a case in which a score corresponding to the difficulty level is equal to or more than a threshold value,
wherein the action determination unit changes a time until the action in response to the question of the user is executed, depending on the score estimated by the difficulty level estimation unit.

7. The action control system according to claim 6, wherein the action determination unit determines an action of enjoying being questioned by the user and an action of answering the question, as the action to be executed, in a case in which an accumulated value of the score is equal to or more than a threshold value, or in a case in which a number of times of the score corresponding to the difficulty level being equal to or more than the threshold value is equal to or more than a predetermined number of times.

8. The action control system according to claim 6, wherein the action determination unit further changes the time until the action in response to the question of the user is executed, in consideration of an attribute of the user.

9. The action control system according to claim 8, wherein the action determination unit changes the time until the action in response to the question of the user is executed, depending on an age or gender of the user as the attribute of the user.

10. An action control system comprising:
an action recognition unit that recognizes an action of a user;
a difficulty level estimation unit that estimates a difficulty level of a question in a case in which the action of the user is recognized as the question; and
an action determination unit that determines an action of answering the question and at least one of an action in which a robot takes a predetermined gesture or an action in which a specific vocal sound is output, as an action to be executed by the robot, in a case in which a score corresponding to the difficulty level is equal to or more than a threshold value.

11. The action control system according to claim 10, wherein the action determination unit selects at least one of a gesture of calling attention to the user, a gesture of making the user pleasant, or a gesture of expressing a content of the answer to the user, as the predetermined gesture, in a case in which the score is equal to or more than a threshold value.

12. The action control system according to claim 10, wherein the action determination unit selects at least one of music or a sound effect having a lower output than a vocal sound of the answer to the user, as the specific vocal sound, in a case in which the score is equal to or more than a threshold value or more.

13. An action control system comprising:
an action recognition unit that recognizes an action of a user;
a difficulty level estimation unit that estimates a difficulty level of a question in a case in which the action of the user is recognized as the question; and
an action determination unit that selects one answer mode from a plurality of answer modes based on a content of the question, and determines an action of answering the question in an aspect according to the difficulty level estimated in the selected answer mode, as an action to be executed by a robot.

14. The action control system according to claim 13, wherein the answer mode includes a conversation mode in which the user mainly has a conversation with the robot, and
the action determination unit sets a reaction of the robot being happy in the conversation mode to be greater than a reaction in other answer modes.

15. The action control system according to claim 13, wherein the answer mode includes a study mode in which the user is taught by the robot, and
the action determination unit sets a reaction of the robot being happy in the study mode to be less than a reaction in other answer modes.

16. The action control system according to claim 13, wherein the answer mode includes a consultation mode in which the user gives consultation to the robot, and
the action determination unit suppresses a reaction of the robot being happy in the consultation mode.

17. An action control system comprising:
an action recognition unit that recognizes actions of one or a plurality of users;
an acquisition unit that acquires, in a case in which an action of one user is recognized as a question, an action of a correct answer to the question; and
an action determination unit that further determines, in a case in which the acquisition unit acquires another answer that is an answer provided by any of the users before the one user is notified of the correct answer, an action in response to the other answer.

18. The action control system according to claim 17, wherein, in a case in which the action determination unit determines an action by comparing the other answer with the correct answer, the action determination unit changes an aspect of the action depending on a case in which the other answer matches with the correct answer, a case in which the other answer does not match with the correct answer, and a case in which the other answer is not applicable.

19. The action control system according to claim 18, wherein the action determination unit changes the aspect of the action depending on whether the action recognition unit recognizes the actions of the one or plurality of users as a funny action or a serious action.

20. A program for causing a computer to function as the action control system according to any one of claims 1 to 19.
